# EUROPEAN PATENT APPLICATION

(11) **EP 4 460 095 A1**
(43) Date of publication of application: **06.11.2024**
(21) Application number: 23777752.9
(22) Date of filing: 03.03.2023
(51) Int. Cl.: H04W 48/02, H04W 48/04

(54) **COMMUNICATION METHOD, COMMUNICATION APPARATUS AND COMMUNICATION SYSTEM**

(30) Priority: 26.03.2022 CN 202210309029
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Körber, Martin Hans
(86) International application number: PCT/CN2023/079497
(87) International publication number: WO 2023/185374

(57) **Abstract**

This application provides a communication method, a communication apparatus, and a communication system. The method includes: An access network device obtains restricted cell information of a first network slice, where the restricted cell information indicates one or more restricted cells in which a service of a terminal device in the first network slice is restricted. The access network device pages, in a first cell, the terminal device based on the restricted cell information, or the access network device hands over the terminal device to a first cell, where the first cell does not belong to the restricted cells of the first network slice. According to the method, normal communication of a terminal device in a newly deployed network slice can be ensured without changing an existing TA division manner, and impact on another service on a live network can be reduced. In addition, a case in which the terminal device is handed over outside a boundary of a newly deployed first network slice and sending and receiving of a service packet are affected can be avoided as much as possible.

## Description

This application claims priority to Chinese Patent Application No. 202210309029.2, filed with the China National Intellectual Property Administration on March 26, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the communication field, and more specifically, to a communication method, a communication apparatus, and a communication system.

### BACKGROUND

A concept of a network slice (network slice) is introduced into a 5th generation (5th Generation, 5G) mobile communication system, and one terminal device supports access to a plurality of network slices. The terminal device selects a corresponding network slice for an application in the terminal device according to a network slice selection policy (network slice selection policy, NSSP). A service of each network slice may be identified by using single-network slice selection assistance information (single-network slice selection assistance information, S-NSSAI). In the 5G communication system, a network slice may be selected for a service based on carried S-NSSAI, and transmission of service data of a client is performed by using the selected network slice.

A mobile network may be divided into a plurality of tracking areas (tracking areas, TAs), and one TA may include a plurality of cells that are geographically close to each other and between which a terminal device moves frequently. Cells in one TA have a homogeneous capability of supporting a network slice. In other words, all cells in one TA support a same quantity of network slices. If one network slice needs to be temporarily added and deployed in a location with a small range, for example, if one network slice needs to be separately added and deployed for a stadium during a sports game but a resource is not expected to be allocated to the newly added network slice in an area outside the stadium, one new TA needs to be separately divided for the stadium area, and then the newly added network slice is deployed in the newly divided TA. In this way, it can be ensured that cells in an original TA and cells in the newly added TA still have a homogeneous capability of supporting a network slice. A terminal device can use the newly added network slice for communication in only the newly divided TA.

When a network slice needs to be temporarily deployed for a location with a small range, an existing TA division manner needs to be modified according to the foregoing implementation. However, a process of modifying the existing TA division manner involves a tedious operation. For example, a terminal device needs to be re-registered. In addition, modifying the existing TA division manner is likely to affect a service on a live network.

### SUMMARY

Embodiments of this application provide a communication method, a communication apparatus, and a communication system. According to the method, normal communication of a terminal device in a newly deployed network slice can be ensured without changing an existing TA division manner, and impact on another service on a live network is reduced.

To achieve the foregoing objectives, the following technical solutions are used in embodiments of this application.

According to a first aspect, a communication method is provided. The method includes: An access network device obtains restricted cell information of a first network slice, where the restricted cell information indicates one or more restricted cells in which a service of a terminal device in the first network slice is restricted. The access network device pages, in a first cell, the terminal device based on the restricted cell information, or the access network device hands over the terminal device to a first cell, where the first cell does not belong to the restricted cells of the first network slice.

According to the foregoing method, when one network slice (for example, the first network slice) is temporarily added and deployed in a location with a small range, or when a service area range of the newly deployed first network slice is inconsistent with a division boundary of a current TA, according to the communication method provided in this embodiment of this application, a range of using the first network slice by the terminal device can be controlled without changing a division manner of the current TA. Specifically, the access network device may obtain the restricted cell information of the newly deployed first network slice, so that the access network device can control a paging process or a cell handover process.

It should be understood that, in this embodiment of this application, "restricted" means that the terminal device is restricted from establishing a user plane connection by using the first network slice, and the "restricted cell" means that when the terminal device is in the cell, the terminal device cannot establish a user plane connection by using the first network slice. For example, the terminal device may access, in a tracking area, a specified first network slice through registration, but cannot establish a user plane connection of a user identity protocol data unit session or activate the user plane connection of the session in some cells in the tracking area by using the first network slice, to perform data transmission.

When the terminal device is in the restricted cell, the terminal device may still access some services of the first network slice by using a control plane connection. For example, the terminal device sends and receives short messages by using the first network slice. When the terminal device attempts to establish a user plane connection in the restricted cell by using the first network slice, the terminal device may receive notification information from a network device by using the first network slice, where the notification message may notify the terminal device that a reason for rejecting establishment of the user plane connection is that the terminal device is currently located in the restricted cell, and the notification message may further notify the terminal device of how to successfully establish the user plane connection by using the first network slice.

In this embodiment of this application, the "restricted cell" may also be referred to as a "network slice constraint cell", and a restricted cell list including a plurality of restricted cells may also be referred to as a "network slice constraint cell list". The network slice constraint cell list is used to describe cells in which the terminal device cannot create or activate a user plane of a session by using the first network slice, to perform service data transmission.

It should be further understood that, in this embodiment of this application, the "restricted cell information" indicates the one or more restricted cells in which the service of the terminal device in the first network slice is restricted.

A cell in a service area of the first network slice meets the following conditions: (1) The cell supports the first network slice. (2) The cell does not belong to the restricted cells of the first network slice.

Correspondingly, a service area cell list of the first network slice includes cells in the service area of the first network slice, and is used to describe cells in which the terminal device can create or activate a user plane of a session by using the first network slice, to perform service data transmission.

With reference to the first aspect, in a possible implementation, that an access network device obtains restricted cell information of a first network slice includes: The access network device receives the restricted cell information from an operation, administration and maintenance device. Alternatively, the access network device receives the restricted cell information from a mobility management network element.

With reference to the first aspect and the foregoing implementation, in a possible implementation, the restricted cell information includes an identifier of a first area, a slice identifier of the first network slice, and information about the one or more cells in which the service of the terminal device is restricted. Alternatively, the restricted cell information includes an identifier of a first area, a slice identifier of the first network slice, and information about another cell that is in the first area and that is other than the one or more cells in which the service of the terminal device is restricted. The first area is any one of a management area of the access network device, a tracking area TA, a registration area RA, and a public land mobile network PLMN.

Optionally, in this embodiment of this application, "information about a cell" may be a cell identifier, cell address information, and any information that can indicate the cell such as a cell global identifier. Correspondingly, the "restricted cell list" may be a combination in any form such as a cell identifier list and/or a cell address list. For example, the restricted cell list is a list including cell global identifiers, and is used to list specific cells that are restricted cells of the first network slice. This is not limited in this embodiment of this application.

With reference to the first aspect and the foregoing implementations, in a possible implementation, the method further includes: The access network device receives a paging message from the mobility management network element, where the paging message includes the slice identifier of the first network slice. That the access network device pages, in a first cell, the terminal device based on the restricted cell information includes: The access network device determines the first cell based on the slice identifier and the restricted cell information, where the first cell is another cell that is in a cell managed by the access network device and that is other than the restricted cell. The access network device broadcasts the paging message in the first cell.

With reference to the first aspect and the foregoing implementations, in a possible implementation, when a session in an active state of the terminal device is in the first network slice and the restricted cell exists in a neighboring cell of a cell in which the terminal device is located, that the access network device hands over the terminal device to a first cell includes: When the session in the active state of the terminal device is in the first network slice and the restricted cell exists in the neighboring cell of the cell in which the terminal device is located, the access network device determines, from the measured neighboring cell based on signal quality of each cell in the neighboring cell of the cell in which the terminal device is located and the restricted cell information, the first cell for handover. The access network device hands over the terminal device to the first cell.

According to the foregoing method, after the terminal device establishes a PDU session by using the first network slice, the access network device may further filter, based on the restricted cell information of the first network slice, a target cell for handover, to avoid, as much as possible, that the terminal device having an activated PDU session in the first network slice is handed over to the restricted cell of the first network slice, avoid that a user plane of the session is deactivated due to an absence of a radio resource, and avoid impact on sending and receiving of a service packet.

With reference to the first aspect and the foregoing implementations, in a possible implementation, the method further includes: The access network device sends a measurement control message to the terminal device. The access network device receives a measurement result sent by the terminal device, where the measurement result includes a cell global identifier and the signal quality of each cell in the measured neighboring cell.

With reference to the first aspect and the foregoing implementations, in a possible implementation, when the restricted cell is a neighboring cell of a cell managed by the access network device, that the access network device determines, from the neighboring cell based on signal quality of each cell in the measured neighboring cell and the restricted cell information, the first cell for handover includes: The access network device determines, based on the signal quality of each cell in the neighboring cell and the restricted cell information, a cell that is in the measured neighboring cell and that is other than the restricted cell as the first cell.

With reference to the first aspect and the foregoing implementations, in a possible implementation, that the access network device determines, from the measured neighboring cell based on signal quality of each cell in the neighboring cell of the cell in which the terminal device is located and the restricted cell information, the first cell for handover includes: The access network device determines a cell that is in the neighboring cell, that is other than the restricted cell, and whose signal quality is higher than signal quality of the cell in which the terminal device is located as the first cell.

With reference to the first aspect and the foregoing implementations, in a possible implementation, the measurement control message further indicates the terminal device to report, in the measurement result, the cell global identifier of each cell in the measured neighboring cell.

According to a second aspect, a communication method is provided. The method includes: A mobility management network element receives information about a cell in which a terminal device is located and a request message from the terminal device, where the request message carries a slice identifier of a first network slice. The mobility management network element determines, based on the slice identifier, the information about the cell in which the terminal device is located, and restricted cell information of the first network slice, that the cell in which the terminal device is located is within a restricted cell range of the first network slice, where the restricted cell information indicates one or more restricted cells in which a service of the terminal device in the first network slice is restricted. The mobility management network element sends a reject message in response to the request message.

With reference to the second aspect, in a possible implementation, the method further includes: The mobility management network element obtains the restricted cell information.

According to the foregoing method, when one network slice, for example, the first network slice, is temporarily added and deployed in a location with a small range, or when a service area range of the newly deployed first network slice is inconsistent with a division boundary of a current TA, according to the communication method provided in this embodiment of this application, a range of using the first network slice by the terminal device can be controlled without changing a division manner of the current TA.

According to the communication method provided in this embodiment of this application, the mobility management network element may obtain the restricted cell information of the newly deployed first network slice, and generate a restricted cell list of the first network slice. In this way, the mobility management network element can control, based on the restricted cell list of the first network slice, a process in which the terminal device establishes a PDU session in the first network slice, control a process in which the terminal device requests a service in the first network slice, and reject establishment or activation of a user plane connection of the PDU session by the terminal device in the restricted cell of the first network slice, to avoid that a user plane of the session is deactivated due to an absence of a radio resource, and avoid impact on sending and receiving of a service packet.

With reference to the second aspect and the foregoing implementation, in a possible implementation, that the mobility management network element obtains the restricted cell information of the first network slice includes: The mobility management network element receives the restricted cell information from an operation, administration and maintenance device. Alternatively, the mobility management network element receives the restricted cell information from an access network device.

With reference to the second aspect and the foregoing implementations, in a possible implementation, the restricted cell information includes an identifier of a first area, the slice identifier of the first network slice, and information about the one or more cells in which the service of the terminal device is restricted. Alternatively, the restricted cell information includes an identifier of a first area, the slice identifier of the first network slice, and information about another cell that is in the first area and that is other than the one or more cells in which the service of the terminal device is restricted. The first area is any one of a management area of the access network device, a tracking area TA, a registration area RA, and a public land mobile network PLMN.

With reference to the second aspect and the foregoing implementations, in a possible implementation, the method further includes: The mobility management network element receives a downlink data transmission request, where the downlink data transmission request includes an identifier of the terminal device and an identifier of a session of the terminal device, where the session is a session in the first network slice. The mobility management network element determines, based on the identifier of the terminal device, the identifier of the session, and the restricted cell information, one or more access network devices that are to perform paging, where a cell managed by the one or more access network devices that are to perform paging includes another cell that is in a registration area RA in which the terminal device is currently located and that is other than the restricted cell. The mobility management network element sends a paging message to the one or more access network devices that are to perform paging.

With reference to the second aspect and the foregoing implementations, in a possible implementation, the method further includes: The mobility management network element receives a downlink data transmission request, where the downlink data transmission request includes an identifier of the terminal device and an identifier of a session of the terminal device, where the session is a session in the first network slice. The mobility management network element determines a paging cell list based on the identifier of the terminal device, the identifier of the session, and the restricted cell information, where a cell in the paging cell list is another cell that is in a registration area RA in which the terminal device is currently located and that is other than the restricted cell. The mobility management network element sends information about the paging cell list to an access network device that manages the another cell.

According to the foregoing method, if the terminal device enters an idle state, and downlink data of the first network slice triggers paging for the terminal device, the mobility management network element may determine, based on the restricted cell list of the first network slice, one or more access network devices that deliver the paging message and one or more cells in which paging is to be performed, and control the paging to be performed only in another cell that is within a deployment boundary of the first network slice and that is other than the restricted cell. In this process, a paging range is effectively controlled, and paging outside the boundary of the first network slice is avoided.

According to a third aspect, a communication method is provided. The method includes: A terminal device sends a request message, where the request message includes a slice identifier of a first network slice. The terminal device receives a response message, where the response message includes indication information indicating that a service of the terminal device in the first network slice is restricted and a slice group identifier corresponding to the first network slice. The terminal device determines, based on the response message, a cell for broadcasting the slice group identifier as a cell to be camped on or a target cell for handover.

According to a fourth aspect, a communication method is provided. The method includes: A terminal device sends a request message, where the request message includes a slice identifier of a first network slice. The terminal device receives a response message, where the response message includes one or more restricted cells indicating that a service of the terminal device in the first network slice is restricted. The terminal device determines, based on the response message, a cell other than the one or more restricted cells as a cell to be camped on or a target cell for handover.

With reference to the third aspect and the fourth aspect, in a possible implementation, the method further includes: When a packet data unit session in an active state is in the first network slice, the terminal device receives a measurement control message sent by an access network device, where the measurement control message indicates the terminal device to perform measurement on signal quality of a plurality of cells. The terminal device sends a measurement result of the signal quality to the access network device, where the measurement result includes the signal quality and a corresponding cell global identifier of each of the plurality of measured cells.

According to the foregoing method, in a registration process, the terminal device may obtain a slice group identifier and indication information indicating whether the first network slice includes the restricted cells. The terminal device may further preferentially select, based on the indication information during movement in a connected state and an idle state, a cell for broadcasting the corresponding slice group identifier as a cell to be camped on or a target cell for handover. Alternatively, the terminal device may obtain restricted cell information of the first network slice, and use a restricted cell of a first network slice 1 as a low-priority target based on the restricted cell information of the first network slice, to select a cell to be camped on or a target cell for handover. According to the method, without changing an existing TA division manner, a case in which the terminal device is handed over outside a boundary of the newly deployed first network slice can be avoided as much as possible, and impact on sending and receiving of a service packet can be avoided.

According to a fifth aspect, an access network device is provided. The access network device includes a transceiver unit and a processing unit. The transceiver unit is configured to obtain restricted cell information of a first network slice, where the restricted cell information indicates one or more restricted cells in which a service of a terminal device in the first network slice is restricted. The processing unit is configured to page, in a first cell, the terminal device based on the restricted cell information, or the processing unit is configured to hand over the terminal device to a first cell, where the first cell does not belong to the restricted cells of the first network slice.

With reference to the fifth aspect, in a possible implementation, the transceiver unit is specifically configured to receive the restricted cell information from an operation, administration and maintenance device, or receive the restricted cell information from a mobility management network element.

With reference to the fifth aspect and the foregoing implementation, in a possible implementation, the transceiver unit is further configured to receive a paging message from the mobility management network element, where the paging message includes a slice identifier of the first network slice. That the processing unit is configured to page, in a first cell, the terminal device based on the restricted cell information includes: The processing unit is specifically configured to: determine the first cell based on the slice identifier and the restricted cell information, and broadcast the paging message in the first cell, where the first cell is another cell that is in a cell managed by the access network device and that is other than the restricted cell.

With reference to the fifth aspect and the foregoing implementations, in a possible implementation, that the processing unit is configured to hand over the terminal device to a first cell includes: The processing unit is configured to: when a session in an active state of the terminal device is in the first network slice and the restricted cell exists in a neighboring cell of a cell in which the terminal device is located, determine, from the measured neighboring cell based on signal quality of each cell in the neighboring cell of the cell in which the terminal device is located and the restricted cell information, the first cell for handover, and hand over the terminal device to the first cell.

With reference to the fifth aspect and the foregoing implementations, in a possible implementation, the transceiver unit is further configured to: send a measurement control message to the terminal device, and receive a measurement result sent by the terminal device, where the measurement result includes a cell global identifier and the signal quality of each cell in the measured neighboring cell.

With reference to the fifth aspect and the foregoing implementations, in a possible implementation, that the processing unit is configured to determine, from the measured neighboring cell based on signal quality of each cell in the neighboring cell of the cell in which the terminal device is located and the restricted cell information, the first cell for handover includes: The processing unit is specifically configured to: when the restricted cell is a neighboring cell of a cell managed by the access network device, determine, based on the signal quality of each cell in the neighboring cell and the restricted cell information, a cell that is in the measured neighboring cell and that is other than the restricted cell as the first cell.

With reference to the fifth aspect and the foregoing implementations, in a possible implementation, that the processing unit is configured to determine, from the measured neighboring cell based on signal quality of each cell in the neighboring cell of the cell in which the terminal device is located and the restricted cell information, the first cell for handover includes: The processing unit is specifically configured to determine a cell that is in the neighboring cell, that is other than the restricted cell, and whose signal quality is higher than signal quality of the cell in which the terminal device is located as the first cell.

According to a sixth aspect, a mobility management network element is provided. The mobility management network element includes a transceiver unit and a processing unit. The transceiver unit is configured to receive information about a cell in which a terminal device is located and a request message from the terminal device, where the request message carries a slice identifier of a first network slice. The processing unit is configured to determine, based on the slice identifier, the information about the cell in which the terminal device is located, and restricted cell information of the first network slice, that the cell in which the terminal device is located is within a restricted cell range of the first network slice, where the restricted cell information indicates one or more restricted cells in which a service of the terminal device in the first network slice is restricted. The transceiver unit is further configured to send a reject message in response to the request message.

With reference to the sixth aspect, in a possible implementation, the transceiver unit is further configured to obtain the restricted cell information of the first network slice.

With reference to the sixth aspect and the foregoing implementation, in a possible implementation, that the transceiver unit is further configured to obtain the restricted cell information of the first network slice specifically includes: The transceiver unit is configured to receive the restricted cell information from an operation, administration and maintenance device, or the transceiver unit is configured to receive the restricted cell information from an access network device.

With reference to the sixth aspect and the foregoing implementations, in a possible implementation, the transceiver unit is further configured to receive a downlink data transmission request, where the downlink data transmission request includes an identifier of the terminal device and an identifier of a session of the terminal device, where the session is a session in the first network slice. The processing unit is further configured to determine, based on the identifier of the terminal device, the identifier of the session, and the restricted cell information, one or more access network devices that are to perform paging, where a cell managed by the one or more access network devices that are to perform paging includes another cell that is in a registration area RA in which the terminal device is currently located and that is other than the restricted cell. The transceiver unit is further configured to send a paging message to the one or more access network devices that are to perform paging.

With reference to the sixth aspect and the foregoing implementations, in a possible implementation, the transceiver unit is further configured to receive a downlink data transmission request, where the downlink data transmission request includes an identifier of the terminal device and an identifier of a session of the terminal device, where the session is a session in the first network slice. The processing unit is further configured to determine a paging cell list based on the identifier of the terminal device, the identifier of the session, and the restricted cell information, where a cell in the paging cell list is another cell that is in a registration area RA in which the terminal device is currently located and that is other than the restricted cell. The transceiver unit is further configured to send information about the paging cell list to an access network device that manages the another cell.

According to a seventh aspect, a terminal device is provided. The terminal device includes a transceiver unit and a processing unit. The transceiver unit is configured to send a request message, where the request message includes a slice identifier of a first network slice. The transceiver unit is further configured to receive a response message, where the response message includes indication information indicating that a service of the terminal device in the first network slice is restricted and a slice group identifier corresponding to the first network slice. The processing unit is configured to determine, based on the response message, a cell for broadcasting the slice group identifier as a cell to be camped on or a target cell for handover.

According to an eighth aspect, a terminal device is provided. The terminal device includes a transceiver unit and a processing unit. The transceiver unit is configured to send a request message, where the request message includes a slice identifier of a first network slice. The transceiver unit is further configured to receive a response message, where the response message includes one or more restricted cells indicating that a service of the terminal device in the first network slice is restricted. The processing unit is configured to determine, based on the response message, a cell other than the one or more restricted cells as a cell to be camped on or a target cell for handover.

With reference to the seventh aspect and the eighth aspect, the transceiver unit is further configured to: when a packet data unit session in an active state is in the first network slice, receive a measurement control message sent by an access network device, where the measurement control message indicates the terminal device to perform measurement on signal quality of a plurality of cells. The transceiver unit is further configured to send a measurement result of the signal quality to the access network device, where the measurement result includes the signal quality and a corresponding cell global identifier of each of the plurality of measured cells.

According to a ninth aspect, a communication system is provided. The communication system includes an access network device and a network device. The network device is configured to send restricted cell information of a first network slice to the access network device, where the restricted cell information indicates one or more restricted cells in which a service of a terminal device in the first network slice is restricted. The access network device is configured to receive the restricted cell information from the network device, and is configured to page, in a first cell, the terminal device based on the restricted cell information, or is configured to hand over the terminal device to a first cell, where the first cell does not belong to the restricted cells of the first network slice.

In a possible design, the access network device in the communication system may be the access network device in the first aspect.

According to a tenth aspect, a communication system is provided. The communication system includes a mobility management network element and a network device. The network device is configured to send restricted cell information to the mobility management network element, where the restricted cell information indicates one or more restricted cells in which a service of a terminal device in a first network slice is restricted. The mobility management network element is configured to: receive information about a cell in which the terminal device is located and a request message from the terminal device, where the request message carries a slice identifier of the first network slice; determine, based on the slice identifier, the information about the cell in which the terminal device is located, and the restricted cell information of the first network slice, that the cell in which the terminal device is located is within a restricted cell range of the first network slice; and send a reject message in response to the request message.

In a possible design, the mobility management network element in the communication system may be the access network device in the second aspect.

According to an eleventh aspect, a communication apparatus configured to implement the foregoing methods is provided. The communication apparatus may be the access network device in the first aspect or an apparatus including the access network device, the communication apparatus may be the mobility management network element in the second aspect or an apparatus including the mobility management network element, or the communication apparatus may be the terminal device in the third aspect or the fourth aspect or an apparatus including the terminal device. The communication apparatus includes corresponding modules, units, or means (means) for implementing the foregoing method. The modules, units, or means (means) may be implemented by hardware, software, or hardware executing corresponding software. The hardware or the software includes one or more modules or units corresponding to the foregoing functions.

According to a twelfth aspect, a communication apparatus is provided. The communication apparatus includes a processor and a memory. The memory is configured to store computer instructions. When the processor executes the instructions, the communication apparatus is enabled to perform the method in any one of the foregoing aspects. The communication apparatus may be the access network device in the first aspect or an apparatus including the access network device, the communication apparatus may be the mobility management network element in the second aspect or an apparatus including the mobility management network element, or the communication apparatus may be the terminal device in the third aspect or the fourth aspect or an apparatus including the terminal device.

According to a thirteenth aspect, a communication apparatus is provided. The communication apparatus includes a processor. The processor is configured to: be coupled to a memory; and after reading instructions in the memory, perform, based on the instructions, the method according to any one of the foregoing aspects. The communication apparatus may be the access network device in the first aspect or an apparatus including the access network device, the communication apparatus may be the mobility management network element in the second aspect or an apparatus including the mobility management network element, or the communication apparatus may be the terminal device in the third aspect or the fourth aspect or an apparatus including the terminal device.

According to a fourteenth aspect, a computer-readable storage medium is provided. The computer-readable storage medium stores instructions. When the instructions are run on a computer, the computer is enabled to perform the method according to any one of the foregoing aspects.

According to a fifteenth aspect, a computer program product including instructions is provided. When the computer program product runs on a computer, the computer is enabled to perform the method according to any one of the foregoing aspects.

According to a sixteenth aspect, a communication apparatus (for example, the communication apparatus may be a chip or a chip system) is provided. The communication apparatus includes a processor, configured to implement a function in any one of the foregoing aspects. In a possible design, the communication apparatus further includes a memory. The memory is configured to store necessary program instructions and data. When being a chip system, the communication apparatus may include a chip, or may include a chip and another discrete component.

For technical effects brought by any design manner in the fifth aspect to the sixteenth aspect, refer to technical effects brought by different design manners in the first aspect to the fourth aspect. Details are not described herein again.

### BRIEF DESCRIPTION OF DRAWINGS

FIG. 1 is a diagram of an example of a communication system according to an embodiment of this application;
FIG. 2 is a diagram of an example of a network architecture according to an embodiment of this application;
FIG. 3 is a diagram of an example of a structure of a communication apparatus according to an embodiment of this application;
FIG. 4 is a diagram of an example of a scenario in which a network slice is newly deployed according to an embodiment of this application;
FIG. 5 is a schematic flowchart of an example of a communication method according to an embodiment of this application;
FIG. 6 is a schematic flowchart of an example of a paging process according to an embodiment of this application;
FIG. 7A and FIG. 7B are a schematic flowchart of an example of a cell handover process according to an embodiment of this application; and
FIG. 8 is a diagram of an example of a structure of a communication apparatus according to an embodiment of this application.

### DESCRIPTION OF EMBODIMENTS

The following describes technical solutions of embodiments in this application with reference to accompanying drawings.

In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The technical solutions in embodiments of this application may be applied to various communication systems, for example, a 5th generation (5th generation, 5G) mobile communication system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may be further applied to device-to-device (device-to-device, D2D) communication system, vehicle-to-everything (vehicle-to-everything, V2X) communication system, machine-to-machine (machine-to-machine, M2M) communication system, machine type communication (machine type communication, MTC) system, an internet of things (internet of things, IoT) communication system, or another communication system. This is not limited in embodiments of this application.

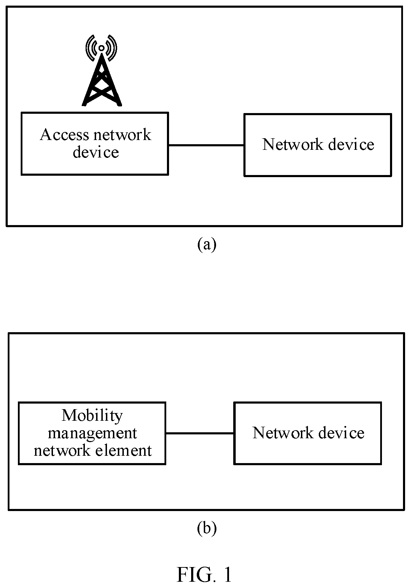

FIG. 1 is a diagram of a communication system according to an embodiment of this application.

For example, as shown in (a) in FIG. 1, the communication system may include an access network device and a network device. The access network device and the network device may directly communicate with each other, or may communicate with each other through forwarding by another device. This is not specifically limited in this embodiment of this application.

Optionally, the network device may be an operation, administration and maintenance (operation, administration and maintenance, OAM) device, a mobility management network element, or the like. A type of the network device is not limited in this embodiment of this application.

The network device is configured to send restricted cell information of a first network slice to the access network device, where the restricted cell information indicates one or more restricted cells in which a service of a terminal device in the first network slice is restricted. The access network device is configured to receive the restricted cell information from the network device, and is further configured to page, in a first cell, the terminal device based on the restricted cell information, or the access network device is configured to hand over the terminal device to a first cell, where the first cell does not belong to the restricted cells of the first network slice. That the first cell does not belong to the restricted cells of the first network slice may be described as that the first cell is in a service area of the first network slice.

In a possible implementation, the access network device is further configured to receive a paging message sent by the network device, where the paging message includes a slice identifier of the first network slice. The access network device is specifically configured to: determine the first cell based on the slice identifier of the first network slice and the restricted cell information, and broadcast the paging message in the first cell, where the first cell is another cell that is in a cell managed by the access network device and that is other than the restricted cell. The first cell may also be referred to as a cell in the service area of the first network slice.

In another possible implementation, the access network device is specifically configured to: when a session in an active state of the terminal device is in the first network slice and the restricted cell exists in a neighboring cell of a cell in which the terminal device is located, determine, from the measured neighboring cell based on signal quality of each cell in the neighboring cell of the cell in which the terminal device is located and the restricted cell information, the first cell for handover, and hand over the terminal device to the first cell.

In another possible implementation, the access network device is further configured to: when the session in the active state of the terminal device is in the first network slice and the restricted cell exists in the neighboring cell of the cell in which the terminal device is located, send a measurement control message to the terminal device; and receive a measurement result sent by the terminal device, where the measurement result includes a cell global identifier and the signal quality of each cell in the measured neighboring cell. A case in which the restricted cell exists in the neighboring cell of the cell in which the terminal device is located may also be referred to as that a cell that does not belong to the service area of the first network slice exists in the neighboring cell of the cell in which the terminal device is located.

In another possible implementation, the access network device is specifically configured to: when the session in the active state of the terminal device is in the first network slice and the restricted cell is a neighboring cell of a cell managed by the access network device, determine, based on the signal quality of each cell in the neighboring cell and the restricted cell information, a cell that is in the measured neighboring cell and that is other than the restricted cell as the first cell. The cell other than the restricted cell may also be referred to as a cell that belongs to the service area of the first network slice.

In another possible implementation, the access network device is specifically configured to determine a cell that is in the neighboring cell, that is other than the restricted cell, and whose signal quality is higher than signal quality of the cell in which the terminal device is located as the first cell.

Based on the communication system provided in (a) in FIG. 1, the access network device in the communication system may obtain the restricted cell information of the newly deployed first network slice, generate a restricted cell list of the first network slice, and exchange the restricted cell list with the network device. Alternatively, the access network device may obtain service area information (namely, specific cells included in the service area) of the newly deployed first network slice, generate a list of cells in the service area of the first network slice, and exchange the list of the cells in the service area of the first network slice with the network device. After the terminal device establishes a PDU session by using the first network slice, the access network device may filter, based on the restricted cell list of the first network slice, a target cell to which the terminal device is to be handed over, to avoid, as much as possible, that the terminal device having an activated PDU session in the first network slice is handed over to the restricted cell of the first network slice (or referred to as being handed over to a cell outside the service area of the first network slice), avoid that a user plane of the session is deactivated due to an absence of a radio resource, and avoid impact on sending and receiving of a service packet.

In addition, if the terminal device enters an idle state, when downlink data of the first network slice triggers paging for the terminal device, the access network device may determine, based on the restricted cell list of the first network slice, one or more cells in which paging is to be performed, and control the paging to be performed only in a cell that is within a deployment boundary of the first network slice and that is other than the restricted cell (in other words, control the paging to be performed only in the cell in the service area of the first network slice). In this process, a paging range is effectively controlled, and paging outside the boundary of the first network slice is avoided.

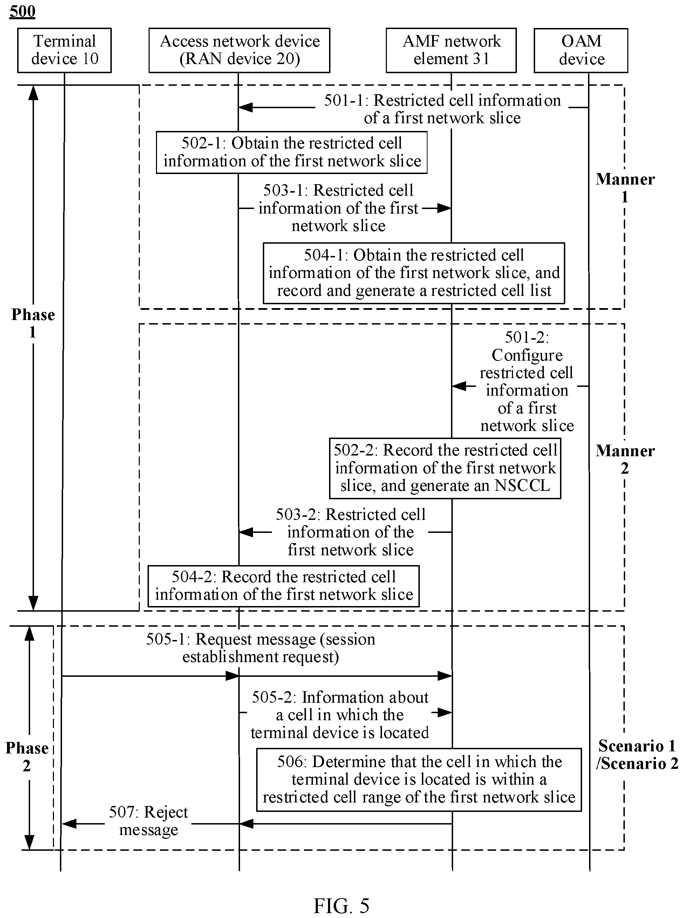

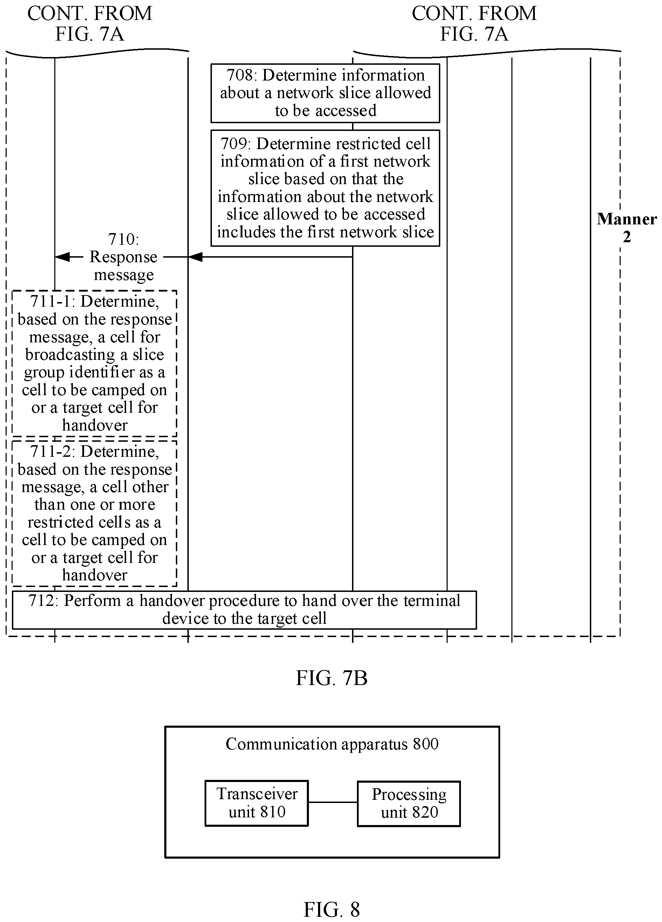

Specifically, for specific interaction between the access network device and the network device in the communication system provided in (a) in FIG. 1, refer to related descriptions in FIG. 5 to FIG. 7A and FIG. 7B in the following method embodiments.

For another example, as shown in (b) in FIG. 1, the communication system may include a mobility management network element and a network device. The mobility management network element and the network device may directly communicate with each other, or may communicate with each other through forwarding by another device. This is not specifically limited in this embodiment of this application.

Optionally, the network device may be an OAM device, a radio access network device (referred to as an "access network device" for short), or the like. A type of the network device is not limited in this embodiment of this application.

The network device is configured to send restricted cell information to the mobility management network element, where the restricted cell information indicates one or more restricted cells in which a service of a terminal device in a first network slice is restricted. The mobility management network element is configured to: receive information about a cell in which the terminal device is located and a request message from the terminal device, where the request message carries a slice identifier of the first network slice; determine, based on the slice identifier, the information about the cell in which the terminal device is located, and the restricted cell information of the first network slice, that the cell in which the terminal device is located is within a restricted cell range of the first network slice; and send a reject message in response to the request message.

In a possible implementation, the mobility management network element is further configured to: receive a downlink data transmission request, where the downlink data transmission request includes an identifier of the terminal device and an identifier of a session of the terminal device, where the session is a session in the first network slice; determine, based on the identifier of the terminal device, the identifier of the session, and the restricted cell information, one or more network devices that are to perform paging, where a cell managed by the one or more network devices that are to perform paging includes another cell that is in a registration area RA in which the terminal device is currently located and that is other than the restricted cell; and send a paging message to the one or more network devices that are to perform paging.

In another possible implementation, the mobility management network element is further configured to: receive a downlink data transmission request, where the downlink data transmission request includes an identifier of the terminal device and an identifier of a session of the terminal device; determine a paging cell list based on the identifier of the terminal device, the identifier of the session, and the restricted cell information, where a cell in the paging cell list is another cell that is in a registration area RA in which the terminal device is currently located and that is other than the restricted cell; and send information about the paging cell list to a network device that manages the another cell.

Based on the communication system provided in (b) in FIG. 1, the mobility management network element in the communication system may obtain the restricted cell information of the newly deployed first network slice, and generate and exchange a restricted cell list of the first network slice. In this way, the mobility management network element can control, based on the restricted cell list of the first network slice, a process in which the terminal device establishes a PDU session in the first network slice, control a process in which the terminal device requests a service in the first network slice, and reject establishment or activation of a user plane connection of the PDU session by the terminal device in the restricted cell of the first network slice.

In addition, if the terminal device enters an idle state, and downlink data of the first network slice triggers paging for the terminal device, the mobility management network element may determine, based on the restricted cell list of the first network slice, one or more access network devices that deliver the paging message and one or more cells in which paging is to be performed, and control the paging to be performed only in another cell that is within a deployment boundary of the first network slice and that is other than the restricted cell. In this process, a paging range is effectively controlled, and paging outside the boundary of the first network slice is avoided.

Specifically, for specific interaction between the mobility management network element and the network device in the communication system provided in (b) in FIG. 1, refer to related descriptions in FIG. 5 to FIG. 7A and FIG. 7B in the following method embodiments.

Optionally, the communication system shown in (a) or (b) in FIG. 1 may be applied to a currently discussed 5G mobile communication network, another future communication network, or the like. The 5G mobile communication network is not limited to a non-roaming scenario or a roaming scenario. This is not specifically limited in this embodiment of this application.

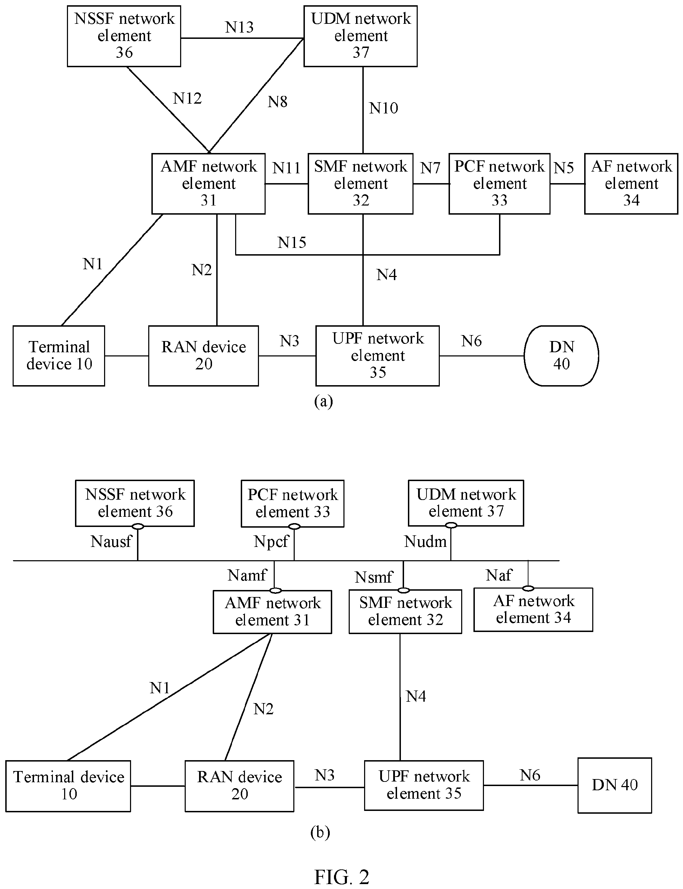

FIG. 2 is a diagram of an example of a network architecture according to an embodiment of this application.

For example, assuming that the communication system shown in (a) or (b) in FIG. 1 is applied to a 5G mobile communication network, the communication system may have a network architecture shown in (a) (or (b)) in FIG. 2. The network architecture may also be referred to as a network architecture of a 5G core network (5G core network, 5GC, or 5GCN). The "access network device" shown in (a) in FIG. 1 may correspond to a RAN device 20 in the 5G network architecture shown in (a) (or (b)) in FIG. 2. The "mobility management network element" shown in (b) in FIG. 1 may correspond to a mobility management function (access and mobility management function, AMF) network element 31 in the 5G network architecture shown in (a) (or (b)) in FIG. 2.

As shown in (a) (or (b)) in FIG. 2, the network architecture may include one or more of a terminal device 10, the radio access network (radio access network, RAN) device 20, the AMF network element 31, a session management network function (session management NF, SMF) network element 32, a policy control function (policy control function, PCF) network element 33, an AF network element 34, a user plane function (user plane function, UPF) network element 35, a network slice selection function (network slice selection function, NSSF) network element 36, a unified data management function (unified data management, UDM) network element 37, a data network (data network, DN) 40, and the like.

It should be understood that the network architecture shown in (a) (or (b)) in FIG. 2 further includes more or fewer devices, entities, network elements, or the like. A type and a quantity of devices included in the network architecture are not limited in embodiments of this application.

In embodiments of this application, the "terminal device" may be at a fixed location, or may be movable. The terminal device may be referred to as user equipment (user equipment, UE), a user equipment terminal, an access terminal, a subscriber unit, a subscriber station, a mobile station, a remote station, a remote terminal, a mobile device, a user terminal, a terminal, a wireless communication device, a user agent, a user apparatus, or the like. Alternatively, the terminal device may be a device that can provide a voice or data for a user, for example, a handheld device having a wireless connection function or an in-vehicle device.

For example, the terminal device may be a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, user equipment in a 5G network, a user terminal in a future evolved public land mobile network (public land mobile network, PLMN), and the like. This is not limited in embodiments of this application.

By way of example, and not limitation, in embodiments of this application, when the terminal device is a wearable device, the terminal device may also be referred to as a "wearable intelligent device", namely, a general term of wearable devices that are developed by applying wearable technologies to intelligent designs of daily wear, for example, glasses, gloves, watches, clothes, and shoes. The wearable device is a portable device that can be directly worn by a user or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to be used together with other devices such as smartphones, for example, various smart bands or smart jewelry for monitoring physical signs.

In addition, in embodiments of this application, the terminal device may alternatively be a device in an IoT system. The IoT is an important constituent part of future development of information technologies. A main technical feature of the IoT is that an article is connected to a network by using a communication technology, to implement an intelligent network for human-machine interconnection and thing-thing interconnection.

It should be noted that the terminal device and the access network device may communicate with each other by using an air interface technology (for example, an NR technology or an LTE technology). The terminal device and another terminal device may also communicate with each other by using an air interface technology (for example, the NR technology or the LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete component. Details are not described in embodiments of this application.

In embodiments of this application, the "access network device" shown in (a) in FIG. 1 may correspond to the RAN device 20 in the 5G network architecture shown in (a) (or (b)) in FIG. 2. The RAN device 20 can provide a function of accessing a communication network for the terminal device. An access device that is in the communication system and that is accessed by the terminal device in a wireless manner is referred to as a "radio access network device", and the radio access network device may be connected to a core network device in a wireless or wired manner. The core network device and the radio access network device may be different independent physical devices, or functions of the core network device and logical functions of the radio access network device may be integrated into a same physical device, or some functions of the core network device and some functions of the radio access network device may be integrated into one physical device.

Optionally, the access network device may include a wireless network device in a 3rd generation partnership project (3rd generation partnership project, 3GPP) network, an access point in a non-3GPP (non-3GPP) network, or the like. The access network device may use different radio access technologies. Currently, there are two types of radio access technologies: a 3GPP access technology and a non-3GPP (non-3GPP) access technology. The 3GPP access technology is an access technology that complies with a 3GPP standard specification, and the 3GPP access technology may include a radio access technology used in a 3rd generation (3rd generation, 3G) system, a 4th generation (4th generation, 4G) system, or a 5G system. For example, the access network device is an access network device gNB in the 5G system. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like.

For example, the access network device may be a base station NodeB, a macro base station, a micro base station (also referred to as a small cell), an evolved NodeB eNodeB, a base station in a 5G mobile communication system (gNodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a base station in a future mobile communication system or an access node (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or a radio controller in a cloud radio access network (cloud radio access network, CRAN) scenario. Alternatively, the access network device may be a relay station, an access point, an in-vehicle device, a wearable device, a network device in a future 5G network, a network device in a future evolved public land mobile communication network (Public Land Mobile Network, PLMN) network, or one or a group (including a plurality of antenna panels) of antenna panels of a base station in a 5G mobile communication system. Alternatively, the access network device may be a network node that forms a gNB or a transmission point, for example, a distributed unit (distributed unit, DU), or a base station in a next-generation communication 6G mobile communication system. A specific technology and a specific device form used by the radio access network device are not limited in embodiments of this application.

It should be understood that, with development and evolution of the communication system, the network architecture may further include more or fewer devices. A type, a quantity, and the like of devices included in the network architecture are not limited in embodiments of this application.

The following briefly describes network elements with different functions in the network architecture.

### (1) AMF network element 31

In the 5G communication system, the AMF network element 31 has an access and mobility management function, and is mainly used for registration of a terminal device, mobility management, tracking area (tracking area, TA) update, and the like in a mobile network. The AMF network element 31 terminates a non-access stratum (non-access stratum, NAS) message, completes registration management, connection management, reachability management, tracking area list (tracking area list, TA list) allocation, mobility management, and the like, and transparently routes a session management (session management, SM) message to the session management network element.

### (2) SMF network element 32

In the 5G communication system, the SMF network element 32 has a session management function, and is mainly used for session management in the mobile network, for example, session establishment, modification, and release. Specifically, the SMF network element 32 may be able to allocate an internet protocol (internet protocol, IP) address to the terminal device 10, select a user plane network element that provides a packet forwarding function, and the like.

### (3) PCF network element 33

In the 5G communication system, the PCF network element 33 has a policy control function, and includes a user subscription data management function, a policy control function, a charging policy control function, quality of service (quality of service, QoS) control, and the like. It should be noted that, in an actual network, the PCF may be further divided into a plurality of network elements based on layers or functions, for example, a global PCF and a PCF in a slice, or a session management PCF (Session Management PCF, SM-PCF) and an access management PCF (Access Management PCF, AM-PCF).

### (4) UPF network element 35

In the 5G communication system, the UPF network element 35 may be connected to a gNB and a data network (for example, the DN 40), and is mainly responsible for processing a user packet, for example, forwarding, charging, or lawful interception. For example, the UPF network element 35 may receive user plane data from the DN 40, and send the user plane data to the terminal device 10 via the AN device. The UPF may further receive user plane data from the terminal device 10 via the AN device, and forward the user plane data to the DN 40.

A user plane network element such as the UPF network element 35 may also be referred to as a "protocol data unit (protocol data unit, PDU)" or a "session anchor (PDU session anchor, PSA)".

### (5) NSSF network element 36

The NSSF network element 36 is mainly configured to select an appropriate network slice (network slice) for a service of the terminal device 10.

### (6) UDM network element 37

The UDM network element 37 is mainly configured to store user information such as registration information and subscription information of the terminal device 10, including storage and management of a device identifier of the terminal device 10, access authorization of the terminal device 10, and the like, and support processing for a call and a session by each network entity.

### (7) DN 40

The DN 40 is an operator network mainly configured to provide a data service for the terminal device 10, for example, the internet (Internet), a third-party service network, or an IP multi-media service (IP multi-media service, IMS) network.

In the network architecture shown in (a) in FIG. 2, the terminal device 10 may communicate with the AMF network element 31 through a next generation network (next generation, N) 1 interface (N1 for short). The RAN device 20 communicates with the AMF network element 31 through an N2 interface (N2 for short). The RAN device 20 communicates with the UPF network element 35 through an N3 interface (N3 for short). The UPF network element 35 communicates with the DN 40 through an N6 interface (N6 for short). The AMF network element 31 communicates with the SMF network element 32 through an N11 interface (N11 for short). The AMF network element 31 communicates with the UDM network element 37 through an N8 interface (N8 for short). The AMF network element 31 communicates with the NSSF network element 36 through an N12 interface (N12 for short). The AMF network element 31 communicates with the PCF network element 33 through an N15 interface (N15 for short). The SMF network element 32 communicates with the PCF network element 33 through an N7 interface (N7 for short). The SMF network element 32 communicates with the UPF network element 35 through an N4 interface (N4 for short). The SMF network element 32 communicates with the UDM network element 37 through an N10 interface (N10 for short). The UDM network element 37 communicates with the NSSF network element 36 through an N13 interface (N13 for short). The PCF network element 33 communicates with the AF network element 34 through an N5 interface (N5 for short).

In addition, it should be noted that control plane network elements such as the AMF network element 31, the SMF network element 32, the UDM network element 37, the NSSF network element 36, the PCF network element 33, or the AF network element 34 in the 5G network architecture shown in (a) in FIG. 2 may alternatively interact with each other through a service-oriented interface. For example, as shown in (b) in FIG. 2, an external service-oriented interface provided by the AMF network element 31 may be Namf, an external service-oriented interface provided by the SMF network element 32 may be Nsmf, an external service-oriented interface provided by the UDM network element 37 may be Nudm, an external service-oriented interface provided by the PCF network element 33 may be Npcf, an external service-oriented interface provided by the NSSF network element 36 may be Nausf, and an external service-oriented interface provided by the AF network element 34 may be Naf. For related descriptions, refer to a 5G system architecture (5G system architecture) in the standard 23501. Details are not described herein.

It should be noted herein that, according to the diagram of the network architecture shown in (a) (or (b)) in FIG. 2, the following points should be further understood.
(1) The network architecture shown in (a) (or (b)) in FIG. 2 may further include another network element or device, for example, an authentication server function (authentication server function, AUSF) network element. The network architecture is not specifically limited in this application.
(2) The network architecture shown in (a) (or (b)) in FIG. 2 is merely an example for description, and a network architecture applicable to embodiments of this application is not limited thereto. Any network architecture that can implement functions of the foregoing network elements or devices is applicable to embodiments of this application.
(3) Functions or network elements in the network architecture shown in (a) (or (b)) in FIG. 2 may be understood as network elements configured to implement different functions, and for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.
(4) Names of different functional network elements or entities in the network architecture shown in (a) (or (b)) in FIG. 2 are defined only for ease of distinguishing between different functions, and should not constitute any limitation on this application. This application does not exclude a possibility of using other names in a 6G network and other networks in the future. For example, in the 6G network, a part or all of the foregoing network elements may still use terms in 5G, or may use other names.
(5) In embodiments of this application, the NSSF network element 36 may be referred to as an "NSSF" or "NSSF entity" for short, the UDM network element 37 may be referred to as a "UDM" or "UDM entity" for short, the AMF network element 31 may be referred to as an "AMF" or "AMF entity" for short, the SMF network element 32 may be referred to as an "SMF" or "SMF entity" for short, and the PCF network element 33 may be referred to as a "PCF" or "PCF entity" for short. In other words, the AMF network element 31 described in embodiments of this application may be replaced with an AMF entity (an access and mobility management function entity, a mobility management entity, or the like), the NSSF network element 36 may be replaced with an NSSF entity (a network slice selection function entity), the UDM network element 37 may be replaced with a UDM entity (a unified data management entity), and the SMF network element 32 may be replaced with an SMF entity (a session management function entity). Details are not described in subsequent embodiments.

Optionally, the access network device (for example, the RAN device 20) or the mobility management network element (for example, the AMF network element 31) in embodiments of this application may also be referred to as a communication apparatus, and may be a general-purpose device or a dedicated device. This is not specifically limited in embodiments of this application.

Optionally, a related function of the access network device (for example, the RAN device 20) or the mobility management network element (for example, the AMF network element 31) in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

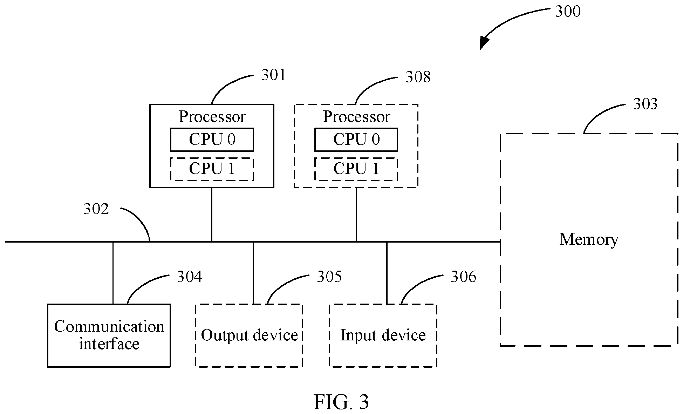

For example, the related function of the access network device (for example, the RAN device 20) or the mobility management network element (for example, the AMF network element 31) in embodiments of this application may be implemented via a communication apparatus 300 in FIG. 3.

FIG. 3 is a diagram of an example of a structure of a communication apparatus 300 according to an embodiment of this application.

It should be understood that the communication apparatus 300 may represent a structure of the access network device (for example, the RAN device 20) in embodiments of this application, or may represent a structure of the mobility management network element (for example, the AMF network element 31). Details are not described subsequently in embodiments of this application.

For example, the communication apparatus 300 includes one or more processors 301, a communication line 302, and at least one communication interface (in FIG. 3, only an example in which a communication interface 304 and one processor 301 are included is used for description). Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path used to connect different components.

The communication interface 304 may be a transceiver module configured to communicate with another device or a communication network such as the Ethernet, a RAN, or a wireless local area network (wireless local area network, WLAN). For example, the transceiver module may be an apparatus such as a transceiver or a transceiver machine. Optionally, the communication interface 304 may alternatively be a transceiver circuit located inside the processor 301, and is configured to implement signal input and signal output of the processor.

The memory 303 may be an apparatus having a storage function. For example, the memory 303 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in an instruction form or a data structure form and that can be accessed by a computer, but is not limited thereto. The memory may exist independently, and is connected to the processor through the communication line 302. The memory may alternatively be integrated with the processor.

The memory 303 is configured to store computer-executable instructions for performing the solutions in this application, and the processor 301 controls execution. The processor 301 is configured to execute the computer-executable instructions stored in the memory 303, to implement a communication method provided in embodiments of this application.

Alternatively, optionally, in embodiments of this application, the processor 301 may perform processing related functions in a communication method provided in the following embodiment in this application, and the communication interface 304 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the processor 301 may include one or more CPUs, for example, a CPU 0 and a CPU 1 in FIG. 3.

During specific implementation, in an embodiment, the communication apparatus 300 may include a plurality of processors, for example, the processor 301 and a processor 308 in FIG. 3. Each of these processors may be a single-core (single-core) processor, or may be a multi-core (multi-core) processor. The processor herein may include but is not limited to at least one of the following: various computing devices that run software, for example, a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, or a sensor device.

The communication apparatus 300 may also be referred to as a communication apparatus sometimes, and may be a general-purpose device or a dedicated device. For example, the communication apparatus 300 may be a desktop computer, a portable computer, a network server, a palmtop computer (personal digital assistant, PDA), a mobile phone, a tablet computer, a wireless terminal device, an embedded device, the foregoing terminal device, the foregoing network device, or a device having a structure similar to that in FIG. 3. A type of the communication apparatus 300 is not limited in this embodiment of this application.

The following describes in detail a communication method provided in embodiments of this application with reference to the accompanying drawings.

It should be noted that names of messages between network elements, names of parameters in the messages, or the like in the following embodiments of this application are merely examples, and there may be other names in a specific implementation. This is not specifically limited in embodiments of this application.

The terminal device 10 supports access to a plurality of network slices (network slices). A network slice is a logical network that can provide a specific network capability and has a specific network characteristic, and the network slice may enable a 5G mobile communication system to meet a differentiated network requirement. In a 5G network, as an on-demand networking manner, network slicing provides an operator with a new service that can be adjusted based on a continuously changing user requirement and that can quickly meet a new application requirement. After a concept of the network slice is introduced, a session of the terminal device needs to access a specific network slice.

For example, a 5G physical network may be abstracted into a plurality of network slices. Each network slice forms an end-to-end logical network. The network slices are logically isolated from each other and do not affect each other. Generally, network characteristics of different network slices are different. For example, an enhanced mobile broadband (enhanced mobile broadband, eMBB)-type network slice needs to have a characteristic of supporting large-bandwidth and low-latency services; a massive machine type connection (massive machine type connection, mMTC)-type network slice has a characteristic of supporting massive access and low bandwidth; and an ultra reliability and low latency connection (ultra reliability and low latency connection, uRLLC)-type slice has characteristics of high reliability and low latency.

A service of each network slice may be identified by using single-network slice selection assistance information (single-network slice selection assistance information, S-NSSAI). The 5G network selects a network slice for a current service based on S-NSSAI carried in a registration request and a session establishment request of the terminal device 10, and performs transmission of service data of a client in the selected network slice. A client may subscribe to a plurality of network slices from an operator network, and the terminal device 10 may request to access a plurality of network slices at the same time. For example, an internet of vehicles terminal may simultaneously access three network slices: mMTC, eMBB, and uRLLC. The mMTC slice is used for daily vehicle fault detection, maintenance reminder, and the like. The eMBB slice is used for instant message communication and online on-demand entertainment of passengers. The uRLLC slice is used for an internet of vehicles application such as non-line-of-sight communication in autonomous driving.

A mobile network may be divided into a plurality of tracking areas (tracking areas, TAs). A plurality of cells that are geographically close to each other and between which a terminal device moves frequently are classified into a same TA. The TAs may be distinguished from each other by using tracking area identities (tracking area identities, TAIs). The TAI includes a mobile country code (mobile country code, MCC), a mobile network code (mobile network code, MNC), and a tracking area code (tracking area code, TAC). Each cell in the TA broadcasts a TAC, and the cell further broadcasts a cell global identifier (cell global identifier, CGI) of the cell. The terminal device may determine, by using the TAC broadcast by the cell, a TA in which the terminal device is currently located, and determine, by using a CGI broadcast by a current cell, a cell on which the terminal device currently camps.

Then, the terminal device 10 may perform the following procedures.

### (1) Network registration procedure of the terminal device 10

For example, the terminal device 10 first selects to camp on a cell, and then sends a registration request message to a core network device (for example, the AMF network element 31) via an access network device (for example, the RAN device 20), to perform the network registration procedure of the terminal device 10.

The registration request message carries information about a network slice that the terminal device 10 requests to access (requested network slice selection assistance information, requested NSSAI). The requested NSSAI includes one or more pieces of S-NSSAI, and these pieces of S-NSSAI belong to a configured network slice configured for the terminal device 10 in a current public land mobile network (public land mobile network, PLMN) (configured NSSAI). Then, the NSSF network element 36 or the AMF network element 31 in the core network may determine, based on a network slice that can be supported by the TA currently accessed by the terminal device 10, information about a network slice that is allowed to be accessed by the terminal device 10 (allowed NSSAI). The allowed NSSAI includes one or more pieces of S-NSSAI. In this case, the terminal device 10 is successfully registered with network slices included in the allowed NSSAI. Subsequently, the terminal device 10 may establish a protocol data unit session (protocol data unit session, PDU session) by using these network slices. Resources of these network slices are used for a user plane connection between the terminal device 10 and a data network (for example, the DN 40), to perform transmission of a service packet of a user.

### (2) Session establishment procedure of the terminal device 10

For example, after one terminal device 10 is successfully registered, the AMF network element 31 responsible for mobility management may determine one registration area (registration area, RA) for the terminal device 10. The RA may include one or more TAs, and in terms of form, the RA is a list of the one or more TAs. When moving within an RA range, the terminal device 10 may establish a PDU session by using the network slice in the allowed NSSAI at any time. The terminal device 10 changes the current cell in the RA range without notifying the core network device (for example, the AMF network element 31 or the SMF network element 32). When moving out of the RA range or accessing a cell outside the RA range, the terminal device 10 needs to perform network registration again.

### (3) Procedure for the terminal device 10 to enter an idle state and perform reconnection

For example, when the terminal device 10 does not have a to-be-sent data packet in a long period of time, the terminal device 10 may release a connection to a network, and enter the idle state.

After entering the idle state, the terminal device 10 may listen for a TAC broadcast by the cell on which the terminal device 10 currently camps, to determine whether the terminal device 10 is still within the range of the RA. When the terminal device 10 is in the idle state, the established user plane connection of the PDU session is deactivated. In this case, the user plane connection does not need to use a resource of these network slices.

When a network side needs to communicate with the terminal device 10 again, for example, when the network side needs to send a downlink data packet to the terminal device 10, the network side may initiate paging (paging) within the range of the RA. A paging message may be broadcast by all cells within the range of the RA. When the terminal device 10 in the idle state can monitor the paging for the terminal device 10 from a cell paging broadcast, the terminal device 10 initiates a connection to the network device, and enters a connected state again. In this case, the network device can communicate with the terminal device 10.

With reference to the foregoing procedures, it can be learned that a quantity and functions of network slices supported in one TA are fixed, in other words, all cells in one TA support a plurality of network slices having a same quantity and same functions. When deployment of a network slice needs to be temporarily modified, or a network slice needs to be temporarily added and deployed in a location with a small range, a case in which the newly deployed network slice is inconsistent with a division boundary of an existing TA on a live network may be caused.

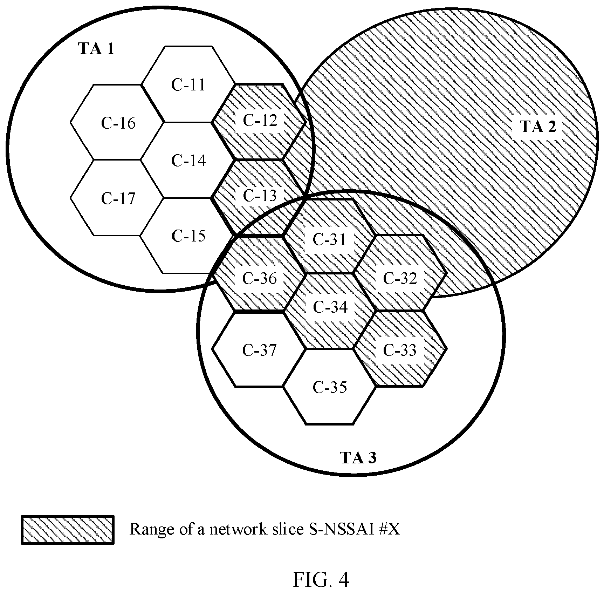

FIG. 4 is a diagram of an example of a scenario in which a network slice is newly deployed according to an embodiment of this application.

For example, the foregoing listed scenario may be shown in FIG. 4. It is assumed that one registration area (registration area, RA) includes three TAs shown in the figure, namely, a TA 1, a TA 2, and a TA 3. Each TA includes a plurality of cells. For example, cells in the TA 1 include C-11, C-12, C-13, C-14, C-15, C-16, and C-17, and cells in the TA3 include C-31, C-32, C-33, C-34, C-35, C-36, and C-37.

It is assumed that the newly deployed network slice is S-NSSAI #X, and is referred to as a "first network slice" in this embodiment of this application. In addition, a service area of the first network slice S-NSSAI #X includes a shaded area shown in FIG. 4. To be specific, the service area of the first network slice S-NSSAI #X includes all cells of the TA 2, the cells C-12 and C-13 of the TA 1, and the cells C-31, C-32, C-33, C-34, and C-36 of the TA 3.

It can be learned from FIG. 4 that a boundary of the service area of the first network slice S-NSSAI #X is different from division boundaries of the TA 1 and the TA 3 on a live network. In a scenario in which the first network slice is newly deployed, a TA needs to be re-divided. For example, the shaded area shown in FIG. 4 is divided into an independent new TA, and then the newly added first network slice is deployed in the newly divided TA. In this way, it can be ensured that a terminal device performs communication in the newly divided TA by using the newly added first network slice.

However, a TA division process is complex, participation of a plurality of parties such as an operator is needed, and a plurality of procedures are needed. In addition, if a TA division manner is modified, the terminal device 10 needs to perform procedures such as the foregoing network registration procedure or session establishment procedure again, and operations in this process are tedious. In addition, modifying the existing TA division is likely to affect a service on a live network.

Therefore, this application provides a communication method. In the method, for the foregoing listed scenario in which network slice deployment in the existing TA needs to be modified, modification of the existing TA division manner can be avoided, so that communication between the terminal device and a target network slice is ensured without changing the existing TA division manner, and impact on another service on the live network is reduced.

It should be understood that, in descriptions of subsequent embodiments of this application, the communication method provided in embodiments of this application is described in detail based on FIG. 1 to FIG. 3 and FIG. 5 to FIG. 7A and FIG. 7B by using the scenario shown in FIG. 4 as an example.

FIG. 5 is a schematic flowchart of an example of a communication method 500 according to an embodiment of this application. It should be understood that the communication method provided in this embodiment of this application may be divided into two phases: Phase 1 and Phase 2.

Phase 1 may be understood as a phase of obtaining restricted cell information of a first network slice. In other words, Phase 1 may include a process in which an access network device (for example, the RAN device 20) obtains the restricted cell information of the first network slice, and a process in which a mobility management network element (for example, the AMF network element 31) obtains the restricted cell information of the first network slice and generates a restricted cell list of the first network slice. Optionally, Phase 1 may further include a process in which the access network device (for example, the RAN device 20) generates the restricted cell information of the first network slice.

Phase 2 may be understood as a process in which the mobility management network element (for example, the AMF network element 31) controls a terminal device to perform network registration, request to establish a session, send a service request, and the like, a process in which the access network device (for example, the RAN device 20) controls the terminal device to perform cell handover, a process in which the mobility management network element (for example, the AMF network element 31) and the access network device (for example, the RAN device 20) can participate in controlling paging after the terminal device is in an idle state to perform reconnection of the terminal device, and the like.

The following describes in detail the communication method provided in embodiments of this application separately for Phase 1 and Phase 2. As shown in FIG. 5, the communication method 500 includes the following.

### Phase 1: Generation phase of the restricted cell information of the first network slice.

Specifically, in Phase 1, the access network device (the RAN device 20) may obtain the restricted cell information of the first network slice, and the mobility management network element (the AMF network element 31) may also obtain the restricted cell information.

It should be understood that, in this embodiment of this application, "restricted" means that the terminal device is restricted from establishing a user plane connection by using the first network slice.

A "restricted cell" means that when the terminal device is in the cell, the terminal device cannot establish a user plane connection by using the first network slice. For example, the terminal device may access, in a tracking area, a specified first network slice through registration, but cannot establish a user plane connection of a user identity protocol data unit (protocol data unit, PDU) session or activate the user plane connection of the session in some cells in the tracking area by using the first network slice, to perform data transmission.

The "restricted cell" may also be referred to as a "network slice constraint cell (network slice constraint cell, NSCC)", and a cell in the "restricted cell" is used to describe a cell in which the terminal device cannot create or activate a user plane of a session by using the first network slice, to perform service data transmission. If a plurality of cells in the "restricted cell" are presented in a form of a list, the list including the plurality of cells is the "restricted cell list". The restricted cell list may also be referred to as a "network slice constraint cell list (network slice constraint cell list, NSCCL)".

It should be further understood that, in this embodiment of this application, the "restricted cell information" indicates one or more restricted cells in which a service of the terminal device in the first network slice is restricted.

Optionally, content included in the "restricted cell information" may include any one of the following cases.
(1) The "restricted cell information" includes information about a cell in a service area of the first network slice.
(2) The "restricted cell information" includes information about another cell that is in a cell supporting the first network slice and that is other than the cell in the service area of the first network slice.
(3) When there are a plurality of TAs in the service area of the first network slice, the "restricted cell information" includes information about a cell that is in a TA and that is in the service area of the first network slice, and information about another cell that is in a TA, that is in a cell supporting the first network slice, and that is other than the cell in the service area of the first network slice.

In a possible implementation, for the foregoing listed three cases of the content included in the "restricted cell information", the "restricted cell information" in the case (1) may be presented in a "whitelist" manner, the "restricted cell information" in the case (2) may be presented in a "blacklist" manner, and the "restricted cell information" in the case (3) may be presented in both a "blacklist" manner and a "whitelist" manner.

Optionally, for the case in which the "restricted cell information" may be presented in the "blacklist" manner or the "whitelist" manner, a special field may be added to the information, and the field indicates that a current cell is configured as a blacklisted cell or is configured as a whitelisted cell, or indicates specific cells in a TA that are configured as blacklisted cells or specific cells in a TA that are configured as whitelisted cells.

If the field is not added, based on a preset configuration of an operator, it may be agreed that the "restricted cell information" is presented in a blacklist form by default, or the "restricted cell information" is presented in a whitelist form by default. This is not limited in this embodiment of this application. When the restricted cell information is configured in the "whitelist" manner, the restricted cell information may also be referred to as a service area cell list of the first network slice.

For example, for a case in which the first network slice may be associated with a plurality of TAs in an existing network, an access network device in each TA may perform configuration in a same manner or a different manner. In other words, restricted cell information of the plurality of TAs associated with the first network slice may be simultaneously configured in the "whitelist" manner. Alternatively, restricted cell information of the plurality of TAs may be simultaneously configured in the "blacklist" manner. Alternatively, in the plurality of TAs, restricted cell information of some TAs is configured in the "whitelist" manner and restricted cell information of some TAs is configured in the "blacklist" manner. This is not limited in this embodiment of this application.

It should be understood that the cell in the service area of the first network slice meets the following conditions.
(1) The cell supports the first network slice.
(2) The cell does not belong to the restricted cells of the first network slice.

Correspondingly, the service area cell list of the first network slice (network slice service area cell list) includes cells in the service area of the first network slice, and is used to describe specific cells in which the terminal device can create or activate a user plane of a session by using the first network slice, to perform service data transmission.

For example, FIG. 4 is used as an example. Table 1 lists a restricted cell and an unrestricted cell of the first network slice S-NSSAI #X. The unrestricted cell is a cell in the service area of the first network slice. The service area of the first network slice S-NSSAI #X includes the shaded area shown in FIG. 4. In this case, the service of the terminal device is restricted in a non-shaded area. To be specific, the service is restricted in the cells C-11, C-14, C-15, C-16, and C-17 in the TA 1, and is restricted in the cells C-35 and C-37 in the TA 3. In this case, the C-11, C-14, C-15, C-16, and C-17 are restricted cells in the TA 1, and the C-35 and C-37 are restricted cells in the TA 3.

For example, it is assumed that the first network slice is associated with the TA 1, TA 2, and TA 3. For example, "restricted cell information" in the TA 1 may be presented in the "blacklist" manner, and a special field may be added to the "restricted cell information" in the TA 1 to indicate that the blacklisted cells C-11, C-14, C-15, C-16, and C-17 are currently configured. "Restricted cell information" in the TA 3 may be presented in the "whitelist" manner, and a special field is added to the "restricted cell information" in the TA 3 to indicate that the whitelisted cells C-31, C-32, C-33, C-34, and C-36 are currently configured. If the TA2 does not have any restricted cell information or is not configured with any restricted cell information, the TA 2 may be considered as including no unrestricted cell by default.

**Table 1**

| **TA identity** | **Restricted cell** | **Unrestricted cell** |
|---|---|---|
| TA 1 | C-11, C-14, C-15, C-16, and C-17 | C-12 and C-13 |
| TA 2 | All cells | \ |
| TA 3 | C-35 and C-37 | C-31, C-32, C-33, C-34, and C-36 |

Optionally, the "restricted cell information" may include an identifier of a first area, a slice identifier of the first network slice, and information about the one or more cells in which the service of the terminal device is restricted.

Optionally, in this embodiment of this application, "information about a cell" may be a cell identifier (identifier, ID), cell address information, or any other information that can indicate the cell, for example, a cell global identifier (global cell identification, GCI). Correspondingly, the "restricted cell list" may be a combination in any form such as a cell identifier list and/or a cell address list. For example, the restricted cell list is a list including cell global identifiers CGIs, and is used to list specific cells that are restricted cells of the first network slice. This is not limited in this embodiment of this application.

Optionally, the first area may be any one of a management area of the access network device RAN area, a tracking area TA, a registration area RA, or a public land mobile network PLMN. Correspondingly, the "identifier of the first area" may be a RAN area ID, a tracking area TA identity, a registration area RA identifier, a public land mobile network PLMN identifier, or the like. This is not limited in this embodiment of this application.

For example, the tracking area TA identity is used as an example. The TA identity may indicate a specific tracking area to which the NSCCL is applicable. If the field does not exist, it indicates that the NSCCL is applicable to a current registration area RA of the terminal device or a current public land mobile network PLMN.

For example, the TA 1 in Table 1 is used as an example. The "restricted cell information" may include information about the TA 1, the slice identifier S-NSSAI #X of the first network slice, and information about a cell identifier list including the cells C-11, C-14, C-15, C-16 and C-17. The "information about a cell identifier list including the cells C-11, C-14, C-15, C-16, and C-17" may be understood as the "blacklist" form, indicating that in the cells C-11, C-14, C-15, C-16, and C-17, the terminal device cannot establish a user plane connection of a PDU session or activate a user plane connection of a session by using the first network slice, to perform data transmission.

Alternatively, optionally, the "restricted cell information" may include the identifier of the first area, the slice identifier of the first network slice, and information about another cell that is in the first area and that is other than the one or more cells in which the service of the terminal device is restricted.

For example, the TA 1 in Table 1 is used as an example. The "restricted cell information" may include information about the TA 1, the slice identifier S-NSSAI #X of the first network slice, and information about a cell identifier list including the cells C-12 and C-13. The "information about a cell identifier list including the cells C-12 and C-13" may be understood as the "whitelist" form, indicating that in the cells C-12 and C-13, the terminal device can establish a PDU session or activate a session by using the first network slice to perform data transmission, and in another cell other than the cells C-12 and C-13, the terminal device cannot establish a user plane connection of a PDU session or activate a user plane connection of a session by using the first network slice to perform data transmission.

After the "restricted cell information" is described, the following describes a possible implementation in which the access network device or the AMF network element obtains the restricted cell information in Phase 1. Phase 1 may include a plurality of different implementations. In this embodiment of this application, two possible manners of obtaining the restricted cell information of the first network slice are listed.

As shown in FIG. 5, Manner 1 includes the following steps.

**501-1:** The access network device receives the restricted cell information from an OAM device.

In a possible implementation, FIG. 4 is used as an example. When the service area of the first network slice S-NSSAI #X shown in the shadow is newly deployed, the OAM device may perform configuration for the RAN device 20 (for example, a gNB 1) in the TA 1, including configuring the newly added first network slice S-NSSAI #X, and configuring a radio resource of the S-NSSAI #X for the cells C-12 and C-13 within a boundary of the TA 1 of the newly deployed first network slice, for example, configuring a resource proportion of the first network slice S-NSSAI #X in radio resource management (radio resource management, RRM), an upper limit of the radio resource, and a lower limit of the radio resource.

The radio resource of the first network slice S-NSSAI #X may not be configured for the other cells C-11, C-14, C-15, C-16, and C-17 in the TA 1 in FIG. 4. Alternatively, the newly added first network slice S-NSSAI #X may be configured for the C-11, C-14, C-15, C-16, and C-17, but the radio resource is not configured for the first network slice S-NSSAI #X. The terminal device cannot perform service packet transmission in these cells by using a user plane, and the cells C-11, C-14, C-15, C-16, and C-17 are restricted cells of the first network slice S-NSSAI #X.

In another possible implementation, the OAM device may configure the restricted cell NSCC information of the first network slice S-NSSAI #X in the foregoing "whitelist" manner or "blacklist" manner.

For example, the OAM device may configure, in the whitelist manner, whitelisted cells {C-12 and C-13} for the RAN device 20 (for example, the gNB 1) in the TA 1. Based on this, the RAN device 20 (for example, a gNB) in the TA 1 may determine that the cells {C-11, C-14, C-15, C-16, and C-17} in the TA 1 other than the whitelisted cells C-12 and C-13 are all restricted cells of the first network slice S-NSSAI #X. The whitelisted cells {C-12 and C-13} are cells in the service area of the first network slice S-NSSAI #X.

Alternatively, the OAM device may configure, in the blacklist manner, blacklisted cells {C-35 and C-37} for a RAN device 20 (for example, a gNB 3) in the TA3. Based on this, the RAN device 20 (for example, the gNB 3) in the TA 3 may determine that the cells C-35 and C-37 in the blacklisted cell list in the TA 3 are restricted cells of the first network slice S-NSSAI #X, and the cells {C-31, C-32, C-33, C-34, and C-36} other than the blacklisted cells C-35 and C-37 are cells in which the terminal device can establish a PDU session or activate a session to perform a normal service in the first network slice S-NSSAI #X, in other words, cells in the service area of the first network slice S-NSSAI #X.

It should be understood that in step 501-1, the OAM device may separately configure a restricted cell of the first network slice S-NSSAI #X in the TA 1 for an access network device in the TA 1, configure a restricted cell of the first network slice S-NSSAI #X in the TA 2 for an access network device in the TA 2, and configure a restricted cell of the first network slice S-NSSAI #X in the TA 3 for an access network device in the TA 3. That is, restricted cell information in each TA is independently configured in the TA.

For example, FIG. 4 is used as an example. If no restricted cell of the first network slice S-NSSAI #X is configured for the access network device in the TA 2, it indicates that there is no restricted cell of the first network slice S-NSSAI #X in the TA2. In other words, all cells in the TA 2 are cells in the service area of the first network slice S-NSSAI #X.

In another possible implementation, when the restricted cell is a neighboring cell of a cell managed by the access network device, the OAM device may further configure neighboring cell information for the access network device, and the access network device may further record neighboring cell information of the first network slice S-NSSAI #X, namely, a neighboring restricted cell.

For example, FIG. 4 is used as an example. Because some cells in the TA 1 are neighboring cells of the cells in the TA 2, the OAM device may further configure neighboring cell information for the access network device (for example, a gNB 2) in the TA 2, in other words, provide a neighboring cell NSCC corresponding to the first network slice S-NSSAI #X. For example, the OAM device provides the neighboring cell C-11 of a cell in the TA 2 for the access network device (for example, the gNB 2) in the TA2, and the neighboring cell C-11 is a restricted cell of the first network slice S-NSSAI #X.

It should be noted that, similarly, when configuring neighboring cells for cells of the TA 1 and the TA 3, the OAM device also provides neighboring cell NSCC information corresponding to the first network slice S-NSSAI #X. In addition, the access network device (for example, the gNB 1) in the TA 1 may further determine neighboring cell information in the TA 1 based on a local restricted cell list NSCCL of the first network slice S-NSSAI #X and a neighboring cell relationship. For example, the access network device (for example, the gNB 1) in the TA 1 may determine, based on that the cell C-11 is not in the whitelist {C-12 and C-13} of the TA 1 of the first network slice S-NSSAI #X, that the neighboring cell C-11 of the C-12 is a restricted cell of the first network slice S-NSSAI #X.

Similarly, the access network devices of the TA 1 and the TA 3 may also record neighboring cell NSCC information of the first network slice S-NSSAI #X. Details are not described herein again.

It should be noted that the foregoing configuring the neighboring cell NSCC information of the first network slice S-NSSAI #X may alternatively be replaced with configuring information about whether a neighboring cell of a cell managed by the access network device is in the service area of the first network slice S-NSSAI #X. The two manners of configuring the neighboring cell may be respectively understood as the blacklist form and the whitelist form described above. Similarly, the access network devices of the TA 1, the TA 2, and the TA 3 may also record information about neighboring cells in the service area of the first network slice S-NSSAI #X. Details are not described herein again.

According to the foregoing manner, the access network device may accurately know whether each cell managed by the access network device is a restricted cell, and may further know whether a restricted cell exists in a neighboring cell of a cell in which the terminal device is currently located, to more accurately control a subsequent process of establishing a session or performing cell handover by the terminal device.

**502-1:** The access network device obtains the restricted cell information of the first network slice.

**503-1:** The access network device sends the restricted cell information of the first network slice to the AMF network element 31.

**504-1:** The AMF network element 31 receives the restricted cell information of the first network slice sent by the access network device, and records and generates the restricted cell list NSCCL of the first network slice.

According to the foregoing step 502-1, the RAN device 20 may record the restricted cell information of the first network slice S-NSSAI #X, and generate a local restricted cell list NSCCL of the first network slice S-NSSAI #X.

Then, according to the foregoing step 503-1, the RAN device 20 may establish a signaling link with the AMF network element 31 after being started or during a running process, and the RAN device 20 and the AMF network element 31 exchange respective support information for the first network slice. In other words, the RAN device 20 reports, to the AMF network element 31, that the RAN device 20 supports the first network slice S-NSSAI #X in this TA range, and the AMF network element 31 reports, to the RAN device 20, that the AMF network element 31 supports the S-NSSAI #X. In addition, if a cell managed by the RAN device relates to a restricted cell, the RAN device reports the restricted cell information of the first network slice S-NSSAI #X to the AMF network element 31, for example, reports the whitelisted cells {C-12 and C-13} of the TA 1.

It should be noted that the RAN device (for example, the gNB 3) in the TA 3 also reports the restricted cell information of the first network slice S-NSSAI #X to the AMF network element 31, for example, reports the cells {C-35 and C-37} in the blacklisted cell list in the TA 3. For the TA 2, because a boundary of the first network slice S-NSSAI #X is consistent with a boundary of the TA 2, the RAN device (for example, the gNB 2) in the TA 2 exchanges only the support information for the first network slice with the AMF network element 31, and does not report the restricted cell information of the first network slice to the AMF network element 31.

The AMF network element 31 obtains the restricted cell information of the first network slice according to step 503-1, and may generate or update a restricted cell list of each TA according to the foregoing step 504-1.

In the foregoing steps, the restricted cell information in the whitelist form may also be referred to as a service area cell list of a network slice. According to the foregoing steps, the AMF network element 31 may generate or update a service area cell list of a network slice of each TA.

As shown in FIG. 5, in another possible implementation, an OAM device may configure the restricted cell information of the first network slice for the AMF network element 31, for example, configure the restricted cell list of the first network slice or the service area cell list of the first network slice. The AMF network element 31 sends the restricted cell list of the first network slice or the service area cell list of the first network slice to the access network device by using a signaling connection to the access network device. This process may be performed according to a procedure of Manner 2 in FIG. 5, and Manner 2 may include the following steps.

**501-2:** The OAM device configures the restricted cell information of the first network slice for the AMF network element 31.

In a specific implementation process, when the first network slice S-NSSAI #X shown in the shadow is newly deployed, the OAM device may perform configuration for the AMF network element 31, and configure the newly added first network slice S-NSSAI #X and a restricted cell list of the first network slice S-NSSAI #X in a PLMN range.

Optionally, the OAM device may uniformly use the blacklist manner or the whitelist manner to list all restricted cells of the first network slice S-NSSAI #X in the PLMN range. For example, the OAM device uniformly uses the blacklist manner or the whitelist manner to configure a restricted cell list including all the restricted cells in the TA 1, the TA 2, and the TA 3 in FIG. 4. The restricted cell information in the whitelist form may also be referred to as a service area cell list of a network slice.

Alternatively, the OAM device may provide the AMF network element 31 with restricted cell information of the first network slice S-NSSAI #X in each TAin the whitelist manner or the blacklist manner based on a TA granularity and different TAs. For details, refer to the manner of configuring the restricted cell in each TA in the foregoing Manner 1.

It should be understood that, for the content of the restricted cell information of the first network slice and more combinations of configuration manners, refer to related descriptions in the foregoing Manner 1. For brevity, details are not described herein again.

**502-2:** The AMF network element 31 records the restricted cell information of the first network slice, and generates the restricted cell list NSCCL of the first network slice.

Specifically, the AMF network element 31 generates a restricted cell list NSCCL of the entire PLMN based on the obtained restricted cell information of the first network slice, and records the restricted cell list NSCCL. The restricted cell list NSCCL of the entire PLMN may be in the whitelist manner or the blacklist manner. This is not limited in this embodiment of this application.

It should be noted that, if the restricted cell list NSCCL of the entire PLMN is in the whitelist manner, in other words, is the service area cell list of the first network slice, it indicates that cells in the PLMN other than cells in the whitelist are all restricted cells of the first network slice. If the restricted cell list NSCCL of the entire PLMN is in the blacklist manner, it indicates that all cells in the blacklist in the PLMN are restricted cells. For brevity, details are not described herein again.

**503-2:** The AMF network element 31 sends the restricted cell information of the first network slice to the access network device.

**504-2:** The access network device receives, from the AMF network element 31, the restricted cell information of the first network slice, and records the restricted cell information of the first network slice.

According to the foregoing step 503-2, the RAN device 20 in each TA may establish a signaling link with the AMF network element 31 after being started or during a running process, and the RAN device 20 and the AMF network element 31 exchange respective support information for the first network slice. In other words, the RAN device 20 reports, to the AMF network element 31, that the RAN device 20 supports the S-NSSAI #X in this TA range. The AMF network element 31 reports, to the RAN device 20, that the AMF network element 31 supports the S-NSSAI #X, and provides the RAN device 20 with a slice restricted cell list NSCCL of the first network slice S-NSSAI #X in the entire PLMN range. The RAN device 20 may record and store a restricted cell list NSCCL in a cell managed by the RAN device 20. This rule applies.

When a neighboring cell of a cell managed by the RAN device 20 is a restricted cell, the RAN device 20 may further record neighboring cell information, namely, a neighboring restricted cell of the first network slice S-NSSAI #X. For details, refer to the foregoing descriptions. For brevity, details are not described herein again.

In a possible implementation, in step 503-2, the AMF network element 31 may alternatively send, when the terminal device is successfully registered with the first network slice, the restricted cell list of the first network slice to the RAN device by using a context transfer message (for example, an N2 message or a registration success response message) of the terminal device. The RAN device may record information about the restricted cell list of the first network slice in a locally stored context of the terminal device.

It should be noted herein that, when the terminal device of the first network slice S-NSSAI #X performs registration in the TA 1 or the TA 3 in FIG. 4, a registration procedure is the same as that of the terminal device in the TA 2. In addition, the registration is not affected when being performed according to an existing registration procedure. The restricted cell information in the whitelist form may also be referred to as the service area cell list of the first network slice.

For example, a registration request message sent by the terminal device may carry information about a network slice that the terminal device 10 requests to access (requested NSSAI), and the requested NSSAI includes the slice identifier S-NSSAI #X of the first network slice. The restricted cell of the first network slice does not affect successful registration of the terminal device with the first network slice S-NSSAI #X. Information about a network slice that is allowed to be accessed and that is provided by the AMF network element 31 for the terminal device (allowed NSSAI) may include the slice identifier S-NSSAI #X of the first network slice, and a registration area RA includes the TA 1, TA 2, and TA 3.

It should be understood that, according to the process of Phase 1, the access network device may obtain the restricted cell information of the first network slice. When a neighboring cell of a cell managed by the access network device is a restricted cell, the access network device may further obtain neighboring cell information, namely, neighboring restricted cell information of the first network slice S-NSSAI #X. In addition, the AMF network element may obtain the restricted cell information of the first network slice in the entire PLMN, namely, the restricted cell list NSCCL.

### Phase 2

Then, in different scenarios, the AMF network element may control a network registration process, a session establishment request process, a service request sending process, or the like of the terminal device. The access network device controls a cell handover process and the like of the terminal device. In addition, after the terminal device is in the idle state, the mobility management network element and the access network device may participate in controlling paging, to perform a reconnection process of the terminal device. The following describes several possible scenarios in Phase 2. For example, Scenario 1, Scenario 2, Scenario 3, and Scenario 4 are listed below.

It should be noted herein that, any scenario listed below may be independently performed, or one or more of the scenarios may be performed. This is not limited in embodiments of this application. The following describes the different scenarios.

### Scenario 1: Scenario in which the terminal device requests to establish a session

When the terminal device initiates PDU session establishment in a cell of the TA 1, the AMF network element 31 may control a PDU session establishment process of the terminal device in the first network slice S-NSSAI #X. As shown in FIG. 5, the communication method 500 may further include the following steps.

**505-1:** The terminal device sends a request message to the AMF network element 31 via the access network device, and the AMF network element 31 receives the request message, where the request message carries the slice identifier of the first network slice.

**505-2:** The AMF network element 31 further receives, from the access network device, information about the cell in which the terminal device is located.

**506:** The AMF network element 31 determines that the cell in which the terminal device is located is within a restricted cell range of the first network slice.

Specifically, the AMF network element 31 may determine, based on the slice identifier, the information about the cell in which the terminal device is located, and the restricted cell information of the first network slice, that the cell in which the terminal device is located is within the restricted cell range of the first network slice.

In other words, when the restricted cell information of the first network slice is the service area cell list of the first network slice in the whitelist form, the AMF network element 31 determines, based on the slice identifier, the information about the cell in which the terminal device is located, and the service area cell list of the first network slice, that the cell in which the terminal device is located is outside a service area range of the first network slice.

**507:** The AMF network element 31 sends, to the terminal device via the access network device, a reject message in response to the request message.

Optionally, the request message is a session establishment request message sent by the terminal device via the access network device, or the request message may be a registration request sent by the terminal device via the access network device, or the like. This is not limited in this embodiment of this application.

In a possible case, when the request message is a session establishment request message sent by the terminal device via the access network device, the session establishment request message sent by the terminal device to the AMF network element 31 via the access network device carries the slice identifier S-NSSAI #X of the first network slice and a CGI of the cell in which the terminal device is currently located. The AMF network element 31 determines, based on the slice identifier S-NSSAI #X of the first network slice and the CGI of the cell in which the terminal device is currently located that are carried in the session establishment request message, and the restricted cell list NSCCL of the first network slice, whether the cell in which the terminal device is currently located is a restricted cell of the first network slice S-NSSAI #X.

A determining result includes the following two cases.

### Case 1

If the cell in which the terminal device is currently located is not in a whitelisted cell list of the first network slice of a TA to which the terminal device belongs, the cell in which the terminal device is currently located is a restricted cell. Alternatively, if the cell in which the terminal device is currently located is in a constraint blacklisted cell list of the first network slice of a TA to which the terminal device belongs, the cell is a restricted cell.

For example, with reference to the scenario in FIG. 4, it is assumed that the terminal device is currently located in the cell C-11 in the TA 1. The AMF network element 31 may determine, based on the cell C-11 in the TA 1 in which the terminal device is currently located, that the C-11 is not in the whitelist {C-12 and C-13} of the TA 1. The AMF network element 31 may determine that the cell C-11 in which the terminal device is currently located is a restricted cell of the first network slice S-NSSAI #X.

For another example, if the cell in which the terminal device is currently located in the TA 1 is the C-12, the AMF network element 31 may determine, based on that the cell C-12 in which the terminal device is currently located in the TA 1 is in the whitelist {C-12 and C-13} of the TA 1, that the cell C-12 is not a restricted cell of the first network slice S-NSSAI #X.

For another example, if the cell in which the terminal device is currently located is the cell C-37 in the TA 3, because the cell C-37 is in the blacklist {C-35 and C-37} of the TA 3, the AMF network element 31 may determine that the cell C-37 is a restricted cell of the first network slice S-NSSAI #X.

For another example, if the cell in which the terminal device is currently located is the cell C-36 in the TA 3, because the cell C-36 is not in the blacklist {C-35 and C-37} of the TA 3, the AMF network element 31 may determine that the cell C-36 is not a restricted cell of the first network slice S-NSSAI #X.

If the cell in which the terminal device is currently located is a restricted cell of the first network slice S-NSSAI #X, the AMF network element 31 determines not to allow the terminal device to establish a PDU session by using the first network slice S-NSSAI #X. Therefore, the AMF network element 31 may perform step 507 of rejecting the request message of the terminal device.

Optionally, if the AMF network element 31 rejects PDU session establishment of the terminal device, the AMF network element 31 may include a reject cause in the reject message sent to the terminal device. The reject cause may be that there is no slice resource, no more procedures are performed, or the like. This is not limited in this embodiment of this application.

### Case 2

If the AMF network element 31 determines, in step 506, that the cell in which the terminal device is currently located is not a restricted cell of the first network slice, the AMF network element 31 allows the terminal device to establish a PDU session. Correspondingly, the following process (1) to (10) is performed.
(1) The AMF network element 31 requests a session management function (session management function, SMF) instance from a network repository function (network repository function, NRF) network element based on the slice identifier S-NSSAI #X of the first network slice carried in the session establishment request message. The AMF network element 31 requests the selected SMF network element 32 to establish a PDU session context, where the message includes information about the session establishment request.
(2) The SMF network element 32 returns a PDU session context establishment response to the AMF network element 31.
(3) After receiving the information about the session establishment request, the SMF network element 32 performs processing, selects an appropriate user plane function (user plane function, UPF), and controls a UPF network element 35 to establish a packet data unit (packet data unit, PDU) session.
(4) The SMF network element 32 sends user plane information of the PDU session to the AMF network element 31 by using an N1N2 transfer message, and the N1N2 transfer message further carries a response message that is for allowing the PDU session establishment and that is to be forwarded to the terminal device.
(5) The AMF network element 31 sends an N2 interface PDU session request message to the access network device. The N2 interface PDU session request message carries the user plane information of the PDU session, and the user plane information includes information such as the first network slice S-NSSAI #X, and a tunnel address and a quality of service (quality of service, QoS) parameter that are of a user plane of the session. The session request message further carries a non-access stratum (non-access stratum, NAS) message that is for allowing the PDU session establishment and that is to be sent to the terminal device.
(6) The access network device sends a radio access network specific resource establishment message to the terminal device, to allocate an air interface radio resource corresponding to the first network slice S-NSSAI #X. The resource establishment message further carries the NAS message that is for allowing the PDU session establishment and that is to be sent to the terminal device.
(7) The access network device sends an N2 interface PDU session response message to the AMF network element 31, where the N2 interface PDU session response message carries user plane information on an AN side.
(8) The AMF network element 31 forwards the user plane information on the AN side to the SMF network element 32 by using a PDU session context update message.
(9) The SMF network element 32 updates user plane connection information, and controls the UPF network element 35 to establish a user plane connection to the access network device.
(10) The SMF network element 32 returns a PDU session context update response message to the AMF network element 31.

According to the foregoing process, when the terminal device requests to establish a PDU session in a cell in a TA of the first network slice S-NSSAI #X, the AMF network element may control a PDU session establishment process of the terminal device in the first network slice S-NSSAI #X. Specifically, the AMF network element may determine, based on the restricted cell information of the first network slice, whether the current cell is a restricted cell of the first network slice. If the current cell is a restricted cell of the first network slice, the AMF network element may reject a session request of the terminal device in the first network slice. If the current cell is not a restricted cell of the first network slice, in other words, the current cell is in the service area of the first network slice, a session of the terminal device in the first network slice may be established according to a procedure in the existing solution. This process may help control, without changing a current TA division manner, a range of using the first network slice by the terminal device.

Optionally, the request message in step 505-1 may alternatively be a registration request of the terminal device. For implementation of this process, refer to an implementation process of the session establishment request message. For example, a registration process of the terminal device may specifically include the following steps.
(1) When the first network slice S-NSSAI #X is newly deployed, the OAM device performs configuration for the AMF network element, including configuring information about the newly added first network slice S-NSSAI #X and the restricted cell list of the S-NSSAI #X in the PLMN range.
(2) The AMF network element records the restricted cell list NSCCL of the first network slice S-NSSAI #X.
(3) The terminal device sends a registration request message to the access network device, where the registration request message carries requested network slice selection assistance information (namely, requested NSSAI). The access network device may forward the registration request message of the terminal device to the AMF network element. In addition to the requested NSSAI, the registration request message further includes a tracking area TA identity TAI of a tracking area in which the terminal device is currently located and a global cell identifier GCI.
(4) The AMF network element receives the registration request message, and obtains subscription information of the terminal device from a UDM network element, where the subscription information includes S-NSSAI of a first network slice to which the terminal device subscribes. In addition, authentication and authorization are performed on the terminal device by using an authentication server function (authentication server function, AUSF). The AMF network element further needs to confirm that S-NSSAI that the terminal device requests to access can correspond to the S-NSSAI to which a user subscribes, in other words, valid S-NSSAI in the requested NSSAI is the subscribed S-NSSAI. The AMF network element may request the NSSF network element to perform slice selection, or the AMF network element completes the slice selection, to determine allowed network slice information of the terminal device, namely, allowed NSSAI. The AMF network element further determines, based on the allowed NSSAI, a registration area RA with which the terminal device is currently registered. For example, the RA includes the TA 1, TA 2, and TA 3.
(5) The AMF network element determines that the allowed NSSAI of the terminal device includes the first network slice S-NSSAI #X, and the first network slice S-NSSAI #X has a restricted cell, and the AMF network element obtains the restricted cell list NSCCL of the first network slice S-NSSAI #X.
(6) The AMF network element accepts the registration request of the terminal device, and sends, to the access network device, an N2 message for establishing a context of the terminal device. The N2 message includes the information about the restricted cell list NSCCL of the first network slice S-NSSAI #X, and further includes a registration success response message sent to the terminal device.
(7) The access network device records the restricted cell list NSCCL of the first network slice S-NSSAI #X in a locally stored context of the terminal device.
(8) The access network device forwards the registration success response message to the terminal device.

It should be noted that the restricted cell list of the first network slice may be a list in the foregoing whitelist form, or may be referred to as a service area cell list of the first network slice.

### Scenario 2: Scenario in which the terminal device requests to activate a PDU session

It should be understood that after successfully establishing a PDU session in the cell C-12 by using the first network slice S-NSSAI #X, the terminal device may perform service packet transmission by using the PDU session.

If the terminal device finally enters the cell C-11 due to movement, the PDU session is deactivated because the cell C-11 does not have the radio resource of the first network slice S-NSSAI #X. In other words, a user plane connection of the established PDU session is released.

If the terminal device has a service packet to be sent by using the PDU session, the terminal device initiates a service request, to request to activate a user plane of the PDU session.

Optionally, in Scenario 2, the request message may be a service request message. Specifically, the terminal device currently located in the cell C-11 sends the service request message to the AMF network element 31 via the access network device. The service request message is used to request to activate the PDU session that has been established by using the first network slice S-NSSAI #X, and the session establishment request message received by the AMF network element 31 carries a CGI of the cell in which the terminal device is currently located.

Specifically, the AMF network element 31 determines, based on the first network slice S-NSSAI #X carried in the service request message, the CGI of the cell in which the terminal device is currently located, and the NSCCL of the first network slice S-NSSAI #X, whether the cell in which the terminal device is currently located is a restricted cell of the first network slice S-NSSAI #X.

### Case 1

For example, if the cell in which the terminal device is currently located is not in a whitelisted cell list of a TA to which the terminal device belongs, the cell is a restricted cell. Alternatively, if the cell in which the terminal device is currently located is in a slice constraint blacklisted cell list of a TA to which the terminal device belongs, the cell is a restricted cell.

If the cell in which the terminal device is currently located is a restricted cell of the first network slice S-NSSAI #X, the AMF network element 31 determines not to allow the terminal device to activate the PDU session of the first network slice S-NSSAI #X.

In Case 1, if the AMF network element 31 rejects activation of the PDU session by the terminal device, the AMF network element 31 may send a reject message to the terminal device according to a process in step 507, a reject cause carried in the reject message may be that there is no slice resource, and the following procedure is not performed.

### Case 2

If the AMF network element 31 determines, in step 506, that the cell in which the terminal device is currently located is not a restricted cell of the first network slice, in other words, the current cell is in the service area of the first network slice, the AMF network element 31 allows the terminal device to establish the PDU session. Correspondingly, the following process (1) to (10) is performed.
(1) If the AMF network element 31 allows the terminal device to activate the PDU session, the AMF network element 31 requests the SMF network element 32 to update a PDU session context, and requests to activate a user plane of the PDU session.
(2) The SMF network element 32 controls the UPF network element 35 to activate the user plane of the PDU session and update a user plane connection.
(3) The SMF network element 32 returns a PDU session context update response to the AMF network element 31, where the PDU session context update response carries user plane information of the PDU session.
(4) The AMF network element 31 sends an N2 interface request message to the access network device, where the N2 interface request message carries the user plane information of the PDU session.
(5) The access network device sends a radio resource connection reconfiguration message to the terminal device, to reallocate an air interface radio resource corresponding to the slice of the first network slice S-NSSAI #X.
(6) The access network device sends an N2 interface response message to the AMF network element 31, to notify that the user plane has been successfully activated.

According to the methods in the foregoing Scenario 1 and Scenario 2, the access network device and the mobility management network element may obtain the restricted cell information of the newly deployed first network slice, and generate and exchange the restricted cell list of the first network slice. In this way, the mobility management network element can control, based on the restricted cell list of the first network slice, the process in which the terminal device establishes the PDU session in the first network slice, control the process in which the terminal device requests a service in the first network slice, and reject the establishment or activation of the user plane connection of the PDU session by the terminal device in the restricted cell of the first network slice, to avoid that the user plane of the session is deactivated due to an absence of the radio resource, and avoid impact on sending and receiving of a service packet.

### Scenario 3: Paging process

If the terminal device is in the idle state, the user plane of the PDU session that has been established by using the first network slice S-NSSAI #X has been deactivated. In this case, if a downlink service packet needs to be sent to the terminal device, a network pages the terminal device. After the paging succeeds, the terminal device may activate the user plane of the PDU session according to the procedure described in the foregoing Scenario 2, and receive the downlink service packet. If a network slice corresponding to the PDU session triggering the paging has a restricted cell, the AMF network element or the access network device controls a paging range.

It should be understood that, after the process described in Phase 1 in FIG. 5, the access network device that manages the restricted cell records the restricted cell information and generates the local restricted cell list NSCCL of the access network device. For example, the access network device records the whitelist {C-12 and C-13} of the TA 1 of the first network slice S-NSSAI #X. Similarly, the access network device in the TA 3 also records the blacklist {C-35 and C-37} of the TA 3 of the first network slice S-NSSAI #X.

Similarly, after the process described in Phase 1 in FIG. 5, the AMF network element 31 generates and records a restricted cell list NSCCL of each TA of the first network slice S-NSSAI #X. The AMF network element 31 starts paging control on the first network slice S-NSSAI #X, to be specific, controls a range of paging triggered by downlink data of the PDU session of the first network slice S-NSSAI #X. Paging triggered in another case is not affected.

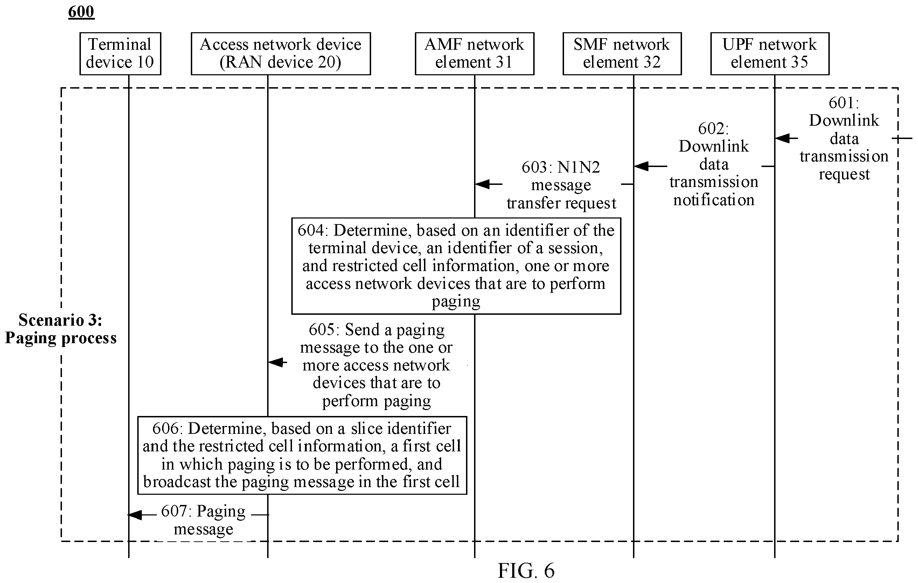

FIG. 6 is a schematic flowchart of an example of a paging process according to an embodiment of this application. For example, as shown in FIG. 6, the paging process 600 in Scenario 3 includes the following steps in FIG. 6.

**601:** The UPF network element 35 receives a downlink data transmission request, and sends a downlink data transmission notification to the SMF network element 32.

Optionally, the downlink data transmission request includes an identifier of the terminal device and an identifier of a session of the terminal device. The session is a session in the first network slice, or the session is associated with the first network slice.

**602:** The SMF network element 32 receives the downlink data transmission notification sent by the UPF network element 35.

**603:** The SMF network element 32 sends an N1N2 message transfer request to the AMF network element 31, where the N1N2 message transfer request includes the identifier of the terminal device and the identifier of the session.

Optionally, the N1N2 message transfer request carries an identity of the terminal device (subscription permanent identifier, SUPI) and an identifier of the PDU session (PDU session ID).

Specifically, the UPF network element 35 receives downlink data of the PDU session associated with the first network slice S-NSSAI #X. Because the terminal device is in the idle state, and the user plane of the PDU session is in a deactivated state, the UPF network element 35 may send a data notification (data notification) to the SMF network element 32, to notify the SMF network element 32 that the downlink data of the PDU session associated with the first network slice S-NSSAI #X arrives.

**604:** The AMF network element 31 determines, based on the identifier of the terminal device, the identifier of the session, and the restricted cell information, one or more access network devices that are to perform paging.

It should be understood that a cell managed by the one or more access network devices that are to perform paging includes another cell that is in the registration area RA in which the terminal device is currently located and that is other than the restricted cell.

Optionally, the AMF network element 31 may search a locally recorded session management context based on the identity of the terminal device (subscription permanent identifier, SUPI) and the identifier of the PDU session (PDU session ID), and determine that the PDU session triggering the paging is the PDU session of the first network slice S-NSSAI #X.

It should be understood that, because the slice paging control on the first network slice S-NSSAI #X is started, the AMF network element 31 determines, based on the restricted cell list of each TA of the first network slice S-NSSAI #X, a target access network device to which a paging message is to be sent. Specifically, the AMF network element 31 determines one or more access network devices that manage an NSCCL whitelisted cell in the RA as access network devices that are to perform paging. Alternatively, the AMF network element 31 does not determine an access network device that manages an NSCCL blacklisted cell in the RA as an access network device that is to perform paging. The restricted cell list of the first network slice in the whitelist form may also be referred to as the service area cell list of the first network slice.

If there is no restricted cell in a cell managed by the access network device that is to perform paging (for example, the access network device in the TA 2) in the RA, the AMF network element 31 determines the access network device as a target access network device that is to perform paging.

Alternatively, if there is a restricted cell in a cell managed by the access network device that is to perform paging (for example, the access network device in the TA 1 or TA 3) in the RA, the AMF network element 31 may determine the access network device as a target access network device that is to perform paging, and subsequently may broadcast the paging message in a part of cells managed by the access network device. If all the cells managed by the access network device are restricted cells of the first network slice, the AMF network element 31 does not determine the access network device as a target access network device that is to perform paging. In other words, the AMF network element 31 determines an access network device as a target access network device that is to perform paging only when there is a cell belonging to the service area of the first network slice in a cell managed by the access network device.

605: The AMF network element 31 sends the paging message to the one or more access network devices that are to perform paging.

606: The access network device receives the paging message from the AMF network element 31, determines, based on the slice identifier and the restricted cell information, a first cell in which paging is to be performed, and broadcasts the paging message in the first cell. The first cell is another cell that is in a cell managed by the access network device and that is other than the restricted cell, in other words, the first cell is in the service area of the first network slice.

It should be understood that the AMF network element 31 delivers the paging message to the target access network device, where the paging message carries the slice identifier S-NSSAI #X of the first network slice of the PDU session triggering the paging.

It should be further understood that one access network device manages a plurality of cells, and the plurality of cells may include a part of restricted cells. Therefore, the access network device may further filter the plurality of managed cells based on the slice identifier and the restricted cell information, and determine, as the first cell in which paging is to be performed, a cell that is in the cells managed by the access network device and that is other than the restricted cells. In this embodiment of this application, the "first cell" represents a type of cells, and the first cell may be one or more cells. A quantity of first cells is not limited herein.

607: The access network device broadcasts, on an air interface by using the determined first cell, the paging message for the terminal device.

It should be understood that, if the terminal device is in a cell in the whitelist of the first network slice S-NSSAI #X, the terminal device can receive the paging message. Then, the terminal device sends a paging response to the access network device, and requests, according to the procedure described in Scenario 2 in the communication method 500 shown in FIG. 5, to activate a PDU session. For a specific process, refer to the foregoing descriptions. For brevity, details are not described herein again.

In a possible case, if the plurality of cells managed by the access network device do not include a restricted cell, the access network device broadcasts, on an air interface by using a cell, the paging message for the terminal device.

In another possible case, if the plurality of cells managed by the access network device include a restricted cell, the access network device determines that the first network slice S-NSSAI #X carried in the received paging message has a corresponding NSCCL, and determines, based on the NSCCL of the first network slice S-NSSAI #X, a target cell in which paging is to be performed. Specifically, the access network device determines a cell in the whitelist of the first network slice S-NSSAI #X as a target cell in which paging is to be performed, or removes a cell in the blacklist of the first network slice S-NSSAI #X from paging cells.

In another possible implementation, for Scenario 3, step 604 may correspond to different implementation processes. An example is as follows.
(1) The AMF network element 31 receives a downlink data transmission request, where the downlink data transmission request includes an identifier of the terminal device and an identifier of a session of the terminal device, where the session is a session in the first network slice.
(2) The AMF network element 31 determines a paging cell list based on the identifier of the terminal device, the identifier of the session, and the restricted cell information, where a cell in the paging cell list is another cell that is in a registration area RA in which the terminal device is currently located and that is other than the restricted cell. In other words, the AMF network element 31 determines an access network device that manages an NSCCL whitelisted cell in the RA as a target access network device for a paging message, and generates a recommended paging cell list based on the NSCCL. The recommended paging cell list indicates one or more cells that are managed by the target access network device and that belong to the service area of the first network slice.
(3) The AMF network element 31 sends information about the paging cell list to an access network device that manages the another cell. Specifically, the AMF network element 31 delivers the paging message to the target access network device. If the target access network device manages a restricted cell, the paging message may carry the paging cell list generated in step (2).

If the target access network device does not manage a restricted cell, a common paging message may be sent to the access network device, and the access network device broadcasts, on an air interface by using a cell, the paging message for the terminal device. If the access network device has the restricted cell information, the access network device determines the NSCCL corresponding to the first network slice S-NSSAI #X carried in the received paging message, determines, by filtering out a restricted cell, a target cell in which paging is to be performed, and broadcasts, on the air interface in the target cell, the paging message for the terminal device.

This is different from step 604 to step 607 described above. In the foregoing solution, the AMF network element 31 may directly determine the one or more cells in which paging is to be performed, and directly send the information about the paging cell list to the access network device that manages the one or more cells in which paging is to be performed. After receiving the information about the paging cell list, the access network may broadcast the paging message in a cell in the paging cell list.

It should be noted herein that, in this embodiment of this application, the "paging message" may have different formats. For example, the paging message sent by the AMF network element 31 to the access network device and the paging message broadcast by the access network device to the target cell may have different encapsulation formats. The paging messages may include same content, or may be associated with a same terminal device, and are both associated with the PDU session of the first network slice. This is not limited in this embodiment of this application.

According to the implementation process in the foregoing Scenario 3, when the terminal device enters the idle state, and the downlink data of the first network slice triggers the paging for the terminal device, the mobility management network element may determine, based on the restricted cell list of the first network slice, the one or more access network devices that deliver the paging and the one or more cells in which paging is to be performed, and control the paging to be performed only in another cell that is within a deployment boundary of the first network slice and that is other than the restricted cell. In this process, the paging range is effectively controlled, and paging outside the boundary of the service area of the first network slice is avoided.

### Scenario 4: Cell handover process

If the terminal device is located at an edge of a deployment range of the first network slice S-NSSAI #X, and the terminal device has an activated PDU session of the first network slice S-NSSAI #X, the terminal device may perform cell handover.

In this embodiment of this application, the cell handover process of the terminal device may be controlled, to keep the terminal device to stay in a whitelisted cell of the first network slice S-NSSAI #X as much as possible, and to avoid that the terminal device is handed over to blacklisted cells of the first network slice S-NSSAI #X because of better radio signal quality of the cells and consequently the PDU session that is in the active state and that is of the first network slice S-NSSAI #X is deactivated.

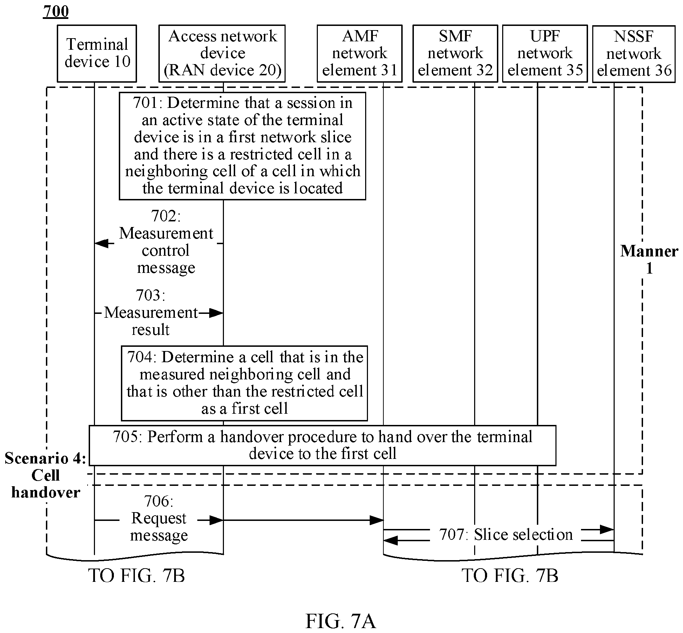

FIG. 7A and FIG. 7B are a schematic flowchart of an example of a cell handover process according to an embodiment of this application. It should be understood that the cell handover process of the terminal device may have a plurality of different implementations, for example, Manner 1 and Manner 2 in this embodiment of this application.

### Manner 1

For example, a process of controlling the cell handover may be steps corresponding to Manner 1 of a method 700 in FIG. 7A and FIG. 7B.

**701:** The access network device determines that a session in an active state of the terminal device is in the first network slice and that there is a restricted cell in a neighboring cell of the cell in which the terminal device is located, in other words, there is a cell that does not belong to the service area of the first network slice in the neighboring cell of the cell in which the terminal device is located.

**702:** The access network device sends a measurement control message to the terminal device, where the measurement control message indicates the terminal device to perform signal quality measurement on a plurality of cells and report a measurement result.

Optionally, the measurement control message further indicates the terminal device to report a cell global identifier of each cell in the measured neighboring cell in the measurement result.

For example, FIG. 4 is used as an example. It is assumed that the terminal device is at an edge of the TA 2. The access network device in the TA 2 determines that a neighboring cell of a first network slice S-NSSAI #X of the PDU session in the active state of the terminal device includes a restricted cell. The access network device in the TA 2 determines to start CGI report of a measurement report. In other words, the terminal device is required to report, in the measurement report, a CGI of the measured cell instead of a physical cell identifier.

**703:** The terminal device starts to perform signal quality measurement on a plurality of neighboring cells based on the measurement control message of the access network device, and reports the measurement result.

In a possible implementation, the terminal device may obtain the CGI of the measured cell based on a PLMN, a TAC, and a cell identifier that are broadcast by the measured cell. Optionally, the terminal device may periodically report the measurement result based on a preset periodicity, or report the measurement result based on a preset trigger condition, where the measurement result carries the CGI of the measured cell. For example, the terminal device at the edge of the TA 2 can receive measurement reports for the cells C-11 and C-12.

**704:** The access network device determines a cell that is in the measured neighboring cell and that is other than the restricted cell as the first cell. Specifically, the access network device may determine, based on the signal quality of each cell in the neighboring cell of the cell in which the terminal device is located and the restricted cell information, a cell that is in the measured neighboring cell and that is other than the restricted cells as the first cell. In other words, the access network device may determine a target cell for handover based on the measurement result.

For example, FIG. 4 is used as an example. It is assumed that the terminal device is at the edge of the TA 2, and the access network device in the TA 2 receives measurement results obtained through signal quality measurement performed by the terminal device on the C-11 and C-12. Signal quality of the C-11 may be better than that of the C-12. However, the access network device filters out, based on the restricted cell information of the first network slice of the PDU session in the active state of the terminal device, the cell C-11 in the blacklist of the first network slice S-NSSAI #X. The C-11 is not used as a target cell for handover, and only the C-12 is used as a target cell for handover. In other words, before signal quality of the cell in which the terminal device is located is lower than a first preset threshold, the access network device uses only a whitelisted cell as a target cell for handover.

In a possible implementation, if the signal quality of the cell in which the terminal device is located is lower than a second preset threshold, or signal quality of a target cell is higher than the signal quality of the cell in which the terminal device is located, the access network device may make a handover decision, to determine to hand over the terminal device to the target cell.

**705:** The access network device, the AMF network element 31, the SMF network element 32, and the UPF network element 35 jointly perform a handover procedure, to hand over the terminal device to the first cell. In other words, the access network device, the AMF network element 31, the SMF network element 32, and the UPF network element 35 jointly hand over the PDU session in the active state of the terminal device to the target cell.

It should be noted that, in some cases, a case in which a target cell for handover is a cell in the blacklist of the first network slice S-NSSAI #X still occurs. For example, when no suitable whitelisted cell is found as the target cell for handover, and the signal quality of the cell in which the terminal device is located is lower than the second preset threshold, a session of the first network slice related to the restricted cell is handed over to the blacklisted cell. Therefore, a user plane of the session is deactivated because there is no radio resource.

In another possible implementation, according to the implementation process of Phase 1 described in FIG. 5, the AMF network element and the access network device have obtained the information about the restricted cell list of the newly deployed first network slice. Then, according to the registration process of the terminal device described in the foregoing Scenario 1 in Phase 2, after the terminal device is successfully registered with the first network slice, the AMF network element may further send, to the terminal device by using non-access stratum (non-access stratum, NAS) signaling, a slice group identifier corresponding to the first network slice and an indication indicating that the first network slice has a restricted cell. The terminal device may preferentially select, based on the indication indicating that the first network slice has a restricted cell, a cell for broadcasting the slice group identifier corresponding to the first network slice as a cell to be camped on or a target cell for handover.

Specifically, the process may be shown in Manner 2 in FIG. 7A and FIG. 7B, and specifically includes the following steps.

**706:** The terminal device sends a request message to the AMF network element 31 via the access network device, where the request message includes the slice identifier of the first network slice.

**707:** The AMF network element 31 requests the NSSF network element 36 to perform slice selection.

Optionally, in this embodiment of this application, the AMF network element 31 may alternatively not request the NSSF network element 36 to perform slice selection, and the AMF network element 31 completes the slice selection. This is not limited in this embodiment of this application.

**708:** The AMF network element 31 determines information about a network slice allowed to be accessed by the terminal device (allowed NSSAI).

It should be understood that the AMF network element 31 may further determine, based on the information about the network slice allowed to be accessed (allowed NSSAI), information about a registration area RA with which the terminal device is currently registered. For example, the information about the RA includes information about the TA 1, TA 2, and TA 3.

**709:** The AMF network element 31 determines that the information about the network slice allowed to be accessed by the terminal device (allowed NSSAI) includes the slice identifier of the first network slice, and records the restricted cell information of the first network slice.

It should be understood that, in step 709, the AMF network element 31 may determine that a restricted cell of the first network slice exists in the registration area RA with which the terminal device is currently registered, and then indicate, to the terminal device, that a restricted cell exists in the first network slice. The indication may include the S-NSSAI #X of the first network slice and a corresponding flag (flag).

**710:** The AMF network element 31 accepts a registration request of the terminal device, and sends a response message to the terminal device via the access network device.

In a possible implementation, the response message includes indication information indicating that the service of the terminal device in the first network slice is restricted, and the slice group identifier corresponding to the first network slice. In this case, the terminal device may determine, according to a process of step 711-1, a cell to be camped on or a target cell for handover.

**711-1:** The terminal device determines, based on the response message, a cell for broadcasting the slice group identifier as a cell to be camped on or a target cell for handover.

Optionally, in this implementation, the response message may further include the information about the network slice allowed to be accessed (allowed NSSAI), the information about the RA, and the like.

For example, the slice identifier of the first network slice is S-NSSAI #X, the corresponding slice group identifier is NSG #1, and the response message may indicate that the first network slice S-NSSAI #X has a restricted cell. Correspondingly, the terminal device may determine, based on the response message, a cell for broadcasting the slice group identifier NSG #1 as a cell to be camped on or a target cell for handover.

It should be understood that the access network device does not broadcast the corresponding slice group identifier in the restricted cell of the first network slice.

For example, the scenario shown in FIG. 4 is used as an example. The slice group identifier corresponding to the first network slice S-NSSAI #X is NSG #1. The access network device records that whitelisted cells of the TA 1 of the first network slice S-NSSAI #X are {C-12 and C-13}. In this case, the access network device broadcasts, in only the cells C-12 and C-13, the slice group identifier NSG #1 corresponding to the first network slice S-NSSAI #X. Similarly, the access network device in the TA 3 also records that blacklisted cells of the TA 3 of the first network slice S-NSSAI #X are {C-35 and C-37}. In this case, the access network device controls the cell C-35 and the cell C-37 not to broadcast the slice group identifier NSG #1 corresponding to the first network slice S-NSSAI #X, and broadcasts the NSG #1 in only another cell in the TA 3.

In addition, after the terminal device establishes the PDU session of the first network slice S-NSSAI #X, if the PDU session is in the active state, the terminal device preferentially provides, to the access network device during cell measurement, a measurement report for a cell for broadcasting the slice group identifier NSG #1. The terminal device provides, to the access network device only when the quality of the cell in which the terminal device is currently located decreases to the preset threshold and none of surrounding cells for broadcasting the slice group identifier NSG#1 meets a handover standard, a measurement report for a cell in which the slice group identifier NSG#1 is not broadcast.

According to the foregoing method, the access network device may determine, based on the restricted cell information of the first network slice, whether to broadcast the slice group identifier corresponding to the first network slice, and may broadcast the corresponding slice group identifier only in a whitelisted cell. After obtaining the response message in the registration process, the terminal device may preferentially select, based on the indication during movement in a connected state and the idle state, a cell for broadcasting the corresponding slice group identifier as a cell to be camped on or a target cell for handover. According to the method, it can be ensured that when the PDU session of the terminal device in the first network slice S-NSSAI #X is in the active state, a case in which the terminal device is handed over to a restricted cell of the first network slice S-NSSAI #X is avoided as much as possible, to avoid that the user plane of the session is deactivated due to the absence of the radio resource, and avoid the impact on sending and receiving of a service packet.

In another possible implementation, the response message in step 710 includes one or more restricted cells indicating that the service of the terminal device in the first network slice is restricted.

Specifically, when the terminal device is successfully registered with the first network slice, the AMF network element 31 may send the restricted cell list of the first network slice to the terminal device by using NAS signaling. The restricted cell list in the whitelist form may also be referred to as the service area cell list of the first network slice. In this way, the terminal device may use, based on the restricted cell list of the first network slice in a process of selecting a cell to be camped on or a target cell for handover, a restricted cell of the first network slice as a low-priority target cell for handover.

In this case, the terminal device may continue to determine, according to a process of step 711-2, a cell to be camped on or a target cell for handover.

**711-2:** The terminal device determines, based on the response message, a cell other than the one or more restricted cells as a cell to be camped on or a target cell for handover.

The terminal device obtains a CGI of a cell from cell broadcast, and preferentially selects, based on the one or more restricted cells of the first network slice, to camp on or be handed over to an unrestricted cell.

It should be understood that, regardless of the implementation shown in step 711-1 or the implementation shown in step 711-2, the terminal device may determine a cell to be camped on by the terminal device or a target cell for handover of the terminal device. Then, step 712 is performed.

**712:** The access network device, the AMF network element 31, the SMF network element 32, and the UPF network element 35 jointly perform the handover procedure, to hand over the terminal device to the target cell.

According to the foregoing solution, when one network slice (for example, the first network slice) is temporarily added and deployed in a location with a small range, or when the service area range of the newly deployed first network slice is inconsistent with the division boundary of the current TA, according to the communication method provided in this embodiment of this application, the range of using the first network slice by the terminal device can be controlled without changing the division manner of the current TA.

First, according to the communication method provided in this embodiment of this application, the access network device and the mobility management network element may obtain the restricted cell information of the newly deployed first network slice, and generate and exchange the restricted cell list of the first network slice. In this way, the mobility management network element can control, based on the restricted cell list of the first network slice, the process in which the terminal device establishes the PDU session in the first network slice, control the process in which the terminal device requests a service in the first network slice, and reject the establishment or activation of the user plane connection of the PDU session by the terminal device in the restricted cell of the first network slice.

Second, after the terminal device establishes the PDU session by using the first network slice, the access network device may further filter, based on the restricted cell information of the first network slice, a target cell for handover, to avoid, as much as possible, that the terminal device having the activated PDU session in the first network slice is handed over to the restricted cell of the first network slice, avoid that the user plane of the session is deactivated due to the absence of the radio resource, and avoid the impact on sending and receiving of a service packet.

In addition, if the terminal device enters the idle state, and downlink data of the first network slice triggers the paging for the terminal device, the mobility management network element may determine, based on the restricted cell list of the first network slice, the one or more access network devices that deliver the paging message and the one or more cells in which paging is to be performed, and control the paging to be performed only in another cell that is within the deployment boundary of the first network slice and that is other than the restricted cell. In this process, the paging range is effectively controlled, and paging outside the boundary of the first network slice is avoided.

Finally, in the method provided in this embodiment of this application, in the registration process, the terminal device may obtain the slice group identifier and the indication information indicating whether the first network slice includes the restricted cells. The terminal device may further preferentially select, based on the indication information during movement in the connected state and the idle state, a cell for broadcasting the corresponding slice group identifier as a cell to be camped on or a target cell for handover. Alternatively, the terminal device may obtain the restricted cell information of the first network slice, and use a restricted cell of a first network slice 1 as a low-priority target based on the restricted cell information of the first network slice, to select a cell to be camped on or a target cell for handover. According to the method, without changing an existing TA division manner, a case in which the terminal device is handed over outside the boundary of the newly deployed first network slice can be avoided as much as possible, and impact on sending and receiving of a service packet can be avoided.

The foregoing describes the communication method according to embodiments of this application. All embodiments are not only applicable to a non-roaming scenario, but also applicable to a scenario in which the terminal device roams to a visited network. In the roaming scenario, the first network slice is a network slice deployed by the visited network, and the access network device, the AMF network element 31, the SMF network element 32, and the UPF network element 35 all belong to the visited network. The following describes a communication apparatus according to embodiments of this application.

It may be understood that, in the foregoing embodiments, the methods and/or steps implemented by the access network device may also be implemented by a component (for example, a chip or a circuit) that may be used for the access network device, and the methods and/or steps implemented by the mobility management network element may also be implemented by a component (for example, a chip or a circuit) that may be used for the mobility management network element.

The communication method provided in embodiments of this application is mainly described above from a perspective of interaction between the devices. Correspondingly, an embodiment of this application further provides a communication apparatus. The communication apparatus may be the access network device in the foregoing method embodiment, an apparatus including the access network device, or a component that may be used in the access network device. Alternatively, the communication apparatus may be the mobility management network element in the foregoing method embodiment, an apparatus including the mobility management network element, or a component that may be used in the mobility management network element.

FIG. 8 is a diagram of an example of a structure of a communication apparatus according to an embodiment of this application.

In a possible case, the communication apparatus 800 may be the access network device in the foregoing embodiment, or may be a chip installed in the access network device, or the communication apparatus 800 may exist in a form of software. This is not limited in this embodiment of this application.

When the communication apparatus is the access network device in the foregoing embodiment, the communication apparatus 800 may include a transceiver unit 810 and a processing unit 820. The transceiver unit 810 may include a receiving unit and a sending unit. The processing unit 820 is configured to control and manage actions of the communication apparatus 800. The transceiver unit 810 is configured to support communication between the communication apparatus 800 and another network entity (for example, a mobility management network element). Optionally, the communication apparatus 800 may further include a storage unit. The storage unit is configured to store program code and data of the communication apparatus 800.

Optionally, each unit in the communication apparatus 800 may be implemented by using software.

Optionally, the processing unit 820 may be a processor or a controller, for example, may be a general-purpose central processing unit (Central Processing Unit, CPU), a general-purpose processor, digital signal processing (Digital Signal Processing, DSP), an application specific integrated circuit (Application Specific Integrated Circuit, ASIC), a field programmable gate array (Field Programmable Gate Array, FPGA), or another programmable logic device, a transistor logic device, a hardware component, or any combination thereof. The processing unit 820 may implement or execute various example logical blocks, units, and circuits described with reference to content disclosed in embodiments of this application. The processor may be a combination of processors implementing a computing function, for example, a combination of one or more microprocessors, or a combination of the DSP and a microprocessor. The transceiver unit 810 may be a communication interface, a transceiver, a transceiver circuit, or the like. The communication interface is a general name. During specific implementation, the communication interface may include a plurality of interfaces, for example, an interface between the access network device and an AMF network element, and/or another interface. The storage unit may be a memory.

The transceiver unit 810 may support communication between the communication apparatus 800 and the mobility management network element or communication between the communication apparatus 800 and the terminal device. For example, the transceiver unit 810 may support the communication apparatus 800 in performing step 501-1, step 503-1, step 503-2, step 505-1, step 505-2, and step 507 in FIG. 5, step 605 and step 607 in FIG. 6, and step 702, step 703, step 706, and step 710 in FIG. 7A and FIG. 7B.

The processing unit 820 may support the communication apparatus 800 in performing the actions of the access network device in the foregoing method examples. For example, the processing unit 820 may support the communication apparatus 800 in performing step 502-1 and step 504-2 in FIG. 5, step 606 in FIG. 6, and step 701, step 704, step 705, and step 712 in FIG. 7A and FIG. 7B.

For example, the following actions may be performed.

The transceiver unit 810 is configured to obtain restricted cell information of a first network slice, where the restricted cell information indicates one or more restricted cells in which a service of a terminal device in the first network slice is restricted.

The processing unit 820 is configured to page, in a first cell, the terminal device based on the restricted cell information, or the processing unit is configured to hand over the terminal device to a first cell, where the first cell does not belong to the restricted cells of the first network slice.

It should be understood that the communication apparatus 800 according to this embodiment of this application may correspond to the access network device in the foregoing method 500, method 600, or method 700. In addition, the units in the communication apparatus 800 and the foregoing other management operations and/or functions are separately used to implement corresponding steps of the foregoing methods. Therefore, beneficial effects in the foregoing method embodiments can also be implemented.

In a possible case, the communication apparatus 800 may be the mobility management network element in the foregoing embodiment, or may be a chip installed in the mobility management network element, or the communication apparatus 800 may exist in a form of software. This is not limited in this embodiment of this application.

When the communication apparatus is the mobility management network element in the foregoing embodiment, the transceiver unit 810 may support communication between the communication apparatus 800 and the mobility management network element or communication between the communication apparatus 800 and the terminal device. For example, the transceiver unit 810 may support the communication apparatus 800 in performing step 503-1, step 501-2, step 503-2, step 505-1, step 505-2, and step 507 in FIG. 5, step 603 and step 605 in FIG. 6, and step 707 and step 710 in FIG. 7A and FIG. 7B.

The processing unit 820 may support the communication apparatus 800 in performing the actions of the mobility management network element in the foregoing method examples. For example, the processing unit 820 may support the communication apparatus 800 in performing step 505-1, step 505-2, and step 506 in FIG. 5, step 604 in FIG. 6, and step 705, step 708, step 709, and step 712 in FIG. 7A and FIG. 7B.

For example, the following actions may be performed.

The transceiver unit 810 is configured to receive information about a cell in which the terminal device is located and a request message from the terminal device, where the request message carries a slice identifier of the first network slice.

The processing unit 820 is configured to determine, based on the slice identifier, the information about the cell in which the terminal device is located, and restricted cell information of the first network slice, that the cell in which the terminal device is located is within a restricted cell range of the first network slice, where the restricted cell information indicates the one or more restricted cells in which the service of the terminal device in the first network slice is restricted.

The transceiver unit 810 is further configured to send a reject message in response to the request message.

It should be understood that when the communication apparatus is the mobility management network element in the foregoing embodiment, the communication apparatus 800 may correspond to the mobility management network element in the foregoing method 500, method 600, or method 700. In addition, the units in the communication apparatus 800 and the foregoing other management operations and/or functions are separately used to implement corresponding steps of the foregoing methods. Therefore, beneficial effects in the foregoing method embodiments can also be implemented.

In a possible case, the communication apparatus 800 may be the terminal device in the foregoing embodiment, or may be a chip installed in the terminal device, or the communication apparatus 800 may exist in a form of software. This is not limited in this embodiment of this application.

When the communication apparatus is the terminal device in the foregoing embodiment, the transceiver unit 810 may support communication between the communication apparatus 800 and the mobility management network element or communication between the communication apparatus 800 and the access network device. For example, the transceiver unit 810 may support the communication apparatus 800 in performing step 505-1 and step 507 in FIG. 5, step 607 in FIG. 6, and step 702, step 703, step 706, and step 710 in FIG. 7A and FIG. 7B.

The processing unit 820 may support the communication apparatus 800 in performing the actions of the terminal device in the foregoing method examples. For example, the processing unit 820 may support the communication apparatus 800 in performing step 705, step 711-1, step 711-2, and step 712 in FIG. 7A and FIG. 7B.

For example, the following actions may be performed.

The transceiver unit 810 is configured to send the request message, where the request message includes the slice identifier of the first network slice.

The transceiver unit 810 is further configured to receive a response message, where the response message includes indication information indicating that the service of the terminal device in the first network slice is restricted, and a slice group identifier corresponding to the first network slice.

The processing unit 820 is configured to determine, based on the response message, a cell for broadcasting the slice group identifier as a cell to be camped on or a target cell for handover.

Alternatively, for example, the following actions may be performed.

The transceiver unit 810 is configured to send the request message, where the request message includes the slice identifier of the first network slice.

The transceiver unit 810 is further configured to receive a response message, where the response message includes the one or more restricted cells indicating that the service of the terminal device in the first network slice is restricted.

The processing unit 820 is configured to determine, based on the response message, a cell other than the one or more restricted cells as a cell to be camped on or a target cell for handover.

It should be understood that the communication apparatus 800 according to this embodiment of this application may correspond to the terminal device in the foregoing method 500, method 600, or method 700. In addition, the units in the communication apparatus 800 and the foregoing other management operations and/or functions are separately used to implement corresponding steps of the foregoing methods. Therefore, beneficial effects in the foregoing method embodiments can also be implemented.

It should be further understood that when the processing unit 820 is a processor and the transceiver unit 810 is a transceiver, the communication apparatus 800 in this embodiment of this application may be the apparatus 300 shown in FIG. 3.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by an access network device, restricted cell information of a first network slice, wherein the restricted cell information indicates one or more restricted cells in which a service of a terminal device in the first network slice is restricted; and
paging, by the access network device in a first cell, the terminal device based on the restricted cell information, or handing over, by the access network device, the terminal device to a first cell, wherein the first cell does not belong to the restricted cells of the first network slice.

2. The method according to claim 1, wherein the obtaining, by an access network device, restricted cell information of a first network slice comprises:
receiving, by the access network device, the restricted cell information from an operation, administration and maintenance device; or
receiving, by the access network device, the restricted cell information from a mobility management network element.

3. The method according to claim 1 or 2, wherein
the restricted cell information comprises an identifier of a first area, a slice identifier of the first network slice, and information about the one or more cells in which the service of the terminal device is restricted; or
the restricted cell information comprises an identifier of a first area, a slice identifier of the first network slice, and information about another cell that is in the first area and that is other than the one or more cells in which the service of the terminal device is restricted, wherein
the first area is any one of a management area of the access network device, a tracking area TA, a registration area RA, and a public land mobile network PLMN.

4. The method according to any one of claims 1 to 3, wherein the method further comprises:
receiving, by the access network device, a paging message from the mobility management network element, wherein the paging message comprises the slice identifier of the first network slice; and
the paging, by the access network device in a first cell, the terminal device based on the restricted cell information comprises:
determining, by the access network device, the first cell based on the slice identifier and the restricted cell information, wherein the first cell is another cell that is in a cell managed by the access network device and that is other than the restricted cell; and
broadcasting, by the access network device, the paging message in the first cell.

5. The method according to any one of claims 1 to 4, wherein when a session in an active state of the terminal device is in the first network slice and the restricted cell exists in a neighboring cell of a cell in which the terminal device is located, the handing over, by the access network device, the terminal device to a first cell comprises:
when the session in the active state of the terminal device is in the first network slice and the restricted cell exists in the neighboring cell of the cell in which the terminal device is located, determining, by the access network device from the measured neighboring cell based on signal quality of each cell in the neighboring cell of the cell in which the terminal device is located and the restricted cell information, the first cell for handover; and
handing over, by the access network device, the terminal device to the first cell.

6. The method according to claim 5, wherein the method further comprises:
sending, by the access network device, a measurement control message to the terminal device; and
receiving, by the access network device, a measurement result sent by the terminal device, wherein the measurement result comprises a cell global identifier and the signal quality of each cell in the measured neighboring cell.

7. The method according to claim 5 or 6, wherein when the restricted cell is a neighboring cell of a cell managed by the access network device, the determining, by the access network device from the neighboring cell based on signal quality of each cell in the measured neighboring cell and the restricted cell information, the first cell for handover comprises:
determining, by the access network device based on the signal quality of each cell in the neighboring cell and the restricted cell information, a cell that is in the measured neighboring cell and that is other than the restricted cell as the first cell.

8. The method according to claim 5 or 6, wherein the determining, by the access network device from the measured neighboring cell based on signal quality of each cell in the neighboring cell of the cell in which the terminal device is located and the restricted cell information, the first cell for handover comprises:
determining, by the access network device, a cell that is in the neighboring cell, that is other than the restricted cell, and whose signal quality is higher than signal quality of the cell in which the terminal device is located as the first cell.

9. The method according to any one of claims 5 to 8, wherein the measurement control message further indicates the terminal device to report, in the measurement result, the cell global identifier of each cell in the measured neighboring cell.

10. A communication method, wherein the method comprises:
receiving, by a mobility management network element, information about a cell in which a terminal device is located and a request message from the terminal device, wherein the request message carries a slice identifier of a first network slice;
determining, by the mobility management network element based on the slice identifier, the information about the cell in which the terminal device is located, and restricted cell information of the first network slice, that the cell in which the terminal device is located is within a restricted cell range of the first network slice, wherein the restricted cell information indicates one or more restricted cells in which a service of the terminal device in the first network slice is restricted; and
sending, by the mobility management network element, a reject message in response to the request message.

11. The method according to claim 10, wherein the method further comprises:
obtaining, by the mobility management network element, the restricted cell information.

12. The method according to claim 11, wherein the obtaining, by the mobility management network element, the restricted cell information of the first network slice comprises:
receiving, by the mobility management network element, the restricted cell information from an operation, administration and maintenance device; or
receiving, by the mobility management network element, the restricted cell information from an access network device.

13. The method according to any one of claims 10 to 12, wherein the restricted cell information comprises an identifier of a first area, the slice identifier of the first network slice, and information about the one or more cells in which the service of the terminal device is restricted; or
the restricted cell information comprises an identifier of a first area, the slice identifier of the first network slice, and information about another cell that is in the first area and that is other than the one or more cells in which the service of the terminal device is restricted, wherein
the first area is any one of a management area of the access network device, a tracking area TA, a registration area RA, and a public land mobile network PLMN.

14. The method according to any one of claims 10 to 13, wherein the method further comprises:
receiving, by the mobility management network element, a downlink data transmission request, wherein the downlink data transmission request comprises an identifier of the terminal device and an identifier of a session of the terminal device, wherein the session is a session in the first network slice;
determining, by the mobility management network element based on the identifier of the terminal device, the identifier of the session, and the restricted cell information, one or more access network devices that are to perform paging, wherein a cell managed by the one or more access network devices that are to perform paging comprises another cell that is in a registration area RA in which the terminal device is currently located and that is other than the restricted cell; and
sending, by the mobility management network element, a paging message to the one or more access network devices that are to perform paging.

15. The method according to any one of claims 10 to 13, wherein the method further comprises:
receiving, by the mobility management network element, a downlink data transmission request, wherein the downlink data transmission request comprises an identifier of the terminal device and an identifier of a session of the terminal device, wherein the session is a session in the first network slice;
determining, by the mobility management network element, a paging cell list based on the identifier of the terminal device, the identifier of the session, and the restricted cell information, wherein a cell in the paging cell list is another cell that is in a registration area RA in which the terminal device is currently located and that is other than the restricted cell; and
sending, by the mobility management network element, information about the paging cell list to an access network device that manages the another cell.

16. An access network device, wherein the access network device comprises a transceiver unit and a processing unit, wherein
the transceiver unit is configured to obtain restricted cell information of a first network slice, wherein the restricted cell information indicates one or more restricted cells in which a service of a terminal device in the first network slice is restricted; and
the processing unit is configured to page, in a first cell, the terminal device based on the restricted cell information, or the processing unit is configured to hand over the terminal device to a first cell, wherein the first cell does not belong to the restricted cells of the first network slice.

17. The access network device according to claim 16, wherein the transceiver unit is specifically configured to:
receive the restricted cell information from an operation, administration and maintenance device; or
receive the restricted cell information from a mobility management network element.

18. The access network device according to claim 16 or 17, wherein
the transceiver unit is further configured to receive a paging message from the mobility management network element, wherein the paging message comprises a slice identifier of the first network slice; and
that the processing unit is configured to page, in a first cell, the terminal device based on the restricted cell information comprises: the processing unit is specifically configured to: determine the first cell based on the slice identifier and the restricted cell information, and broadcast the paging message in the first cell, wherein the first cell is another cell that is in a cell managed by the access network device and that is other than the restricted cell.

19. The access network device according to any one of claims 16 to 18, wherein that the processing unit is configured to hand over the terminal device to a first cell comprises:
the processing unit is configured to: when a session in an active state of the terminal device is in the first network slice and the restricted cell exists in a neighboring cell of a cell in which the terminal device is located, determine, from the measured neighboring cell based on signal quality of each cell in the neighboring cell of the cell in which the terminal device is located and the restricted cell information, the first cell for handover, and hand over the terminal device to the first cell.

20. The access network device according to claim 19, wherein that the processing unit is configured to determine, from the measured neighboring cell based on signal quality of each cell in the neighboring cell of the cell in which the terminal device is located and the restricted cell information, the first cell for handover comprises:
the processing unit is specifically configured to: when the restricted cell is a neighboring cell of a cell managed by the access network device, determine, based on the signal quality of each cell in the neighboring cell and the restricted cell information, a cell that is in the measured neighboring cell and that is other than the restricted cell as the first cell.

21. The access network device according to claim 19, wherein that the processing unit is configured to determine, from the measured neighboring cell based on signal quality of each cell in the neighboring cell of the cell in which the terminal device is located and the restricted cell information, the first cell for handover comprises:
the processing unit is specifically configured to determine a cell that is in the neighboring cell, that is other than the restricted cell, and whose signal quality is higher than signal quality of the cell in which the terminal device is located as the first cell.

22. A mobility management network element, wherein the mobility management network element comprises a transceiver unit and a processing unit, wherein
the transceiver unit is configured to receive information about a cell in which a terminal device is located and a request message from the terminal device, wherein the request message carries a slice identifier of a first network slice;
the processing unit is configured to determine, based on the slice identifier, the information about the cell in which the terminal device is located, and restricted cell information of the first network slice, that the cell in which the terminal device is located is within a restricted cell range of the first network slice, wherein the restricted cell information indicates one or more restricted cells in which a service of the terminal device in the first network slice is restricted; and
the transceiver unit is further configured to send a reject message in response to the request message.

23. The mobility management network element according to claim 22, wherein the transceiver unit is further configured to obtain the restricted cell information of the first network slice.

24. The mobility management network element according to claim 23, wherein that the transceiver unit is further configured to obtain the restricted cell information of the first network slice specifically comprises:
the transceiver unit is configured to receive the restricted cell information from an operation, administration and maintenance device; or
the transceiver unit is configured to receive the restricted cell information from an access network device.

25. The mobility management network element according to any one of claims 22 to 24, wherein
the transceiver unit is further configured to receive a downlink data transmission request, wherein the downlink data transmission request comprises an identifier of the terminal device and an identifier of a session of the terminal device, wherein the session is a session in the first network slice;
the processing unit is further configured to determine, based on the identifier of the terminal device, the identifier of the session, and the restricted cell information, one or more access network devices that are to perform paging, wherein a cell managed by the one or more access network devices that are to perform paging comprises another cell that is in a registration area RAin which the terminal device is currently located and that is other than the restricted cell; and
the transceiver unit is further configured to send a paging message to the one or more access network devices that are to perform paging.

26. The mobility management network element according to any one of claims 22 to 24, wherein
the transceiver unit is further configured to receive a downlink data transmission request, wherein the downlink data transmission request comprises an identifier of the terminal device and an identifier of a session of the terminal device, wherein the session is a session in the first network slice;
the processing unit is further configured to determine a paging cell list based on the identifier of the terminal device, the identifier of the session, and the restricted cell information, wherein a cell in the paging cell list is another cell that is in a registration area RA in which the terminal device is currently located and that is other than the restricted cell; and
the transceiver unit is further configured to send information about the paging cell list to an access network device that manages the another cell.

27. A communication system, wherein the communication system comprises an access network device and a network device, wherein
the network device is configured to send restricted cell information of a first network slice to the access network device, wherein the restricted cell information indicates one or more restricted cells in which a service of a terminal device in the first network slice is restricted; and
the access network device is configured to receive the restricted cell information from the network device, and is configured to page, in a first cell, the terminal device based on the restricted cell information, or the access network device is configured to hand over the terminal device to a first cell, wherein the first cell does not belong to the restricted cells of the first network slice.

28. A communication system, wherein the communication system comprises a mobility management network element and a network device, wherein
the network device is configured to send restricted cell information to the mobility management network element, wherein the restricted cell information indicates one or more restricted cells in which a service of a terminal device in a first network slice is restricted; and
the mobility management network element is configured to: receive information about a cell in which the terminal device is located and a request message from the terminal device, wherein the request message carries a slice identifier of the first network slice; determine, based on the slice identifier, the information about the cell in which the terminal device is located, and the restricted cell information of the first network slice, that the cell in which the terminal device is located is within a restricted cell range of the first network slice; and send a reject message in response to the request message.

29. A computer-readable storage medium, wherein the computer-readable storage medium stores instructions, and when the instructions are run on a computer, the computer is enabled to perform the method according to any one of claims 1 to 9 or the method according to any one of claims 10 to 15.

30. A communication method, wherein the method comprises:
sending, by a network device, restricted cell information of a first network slice to an access network device, wherein the restricted cell information indicates one or more restricted cells in which a service of a terminal device in the first network slice is restricted;
receiving, by the access network device, the restricted cell information from the network device; and
paging, by the access network device in a first cell, the terminal device based on the restricted cell information, or handing over the terminal device to a first cell, wherein the first cell does not belong to the restricted cells of the first network slice.

31. A communication method, wherein the method comprises:
sending, by a network device, restricted cell information to a mobility management network element, wherein the restricted cell information indicates one or more restricted cells in which a service of a terminal device in a first network slice is restricted;
receiving, by the mobility management network element, information about a cell in which the terminal device is located and a request message from the terminal device, wherein the request message carries a slice identifier of the first network slice;
determining, by the mobility management network element based on the slice identifier, the information about the cell in which the terminal device is located, and the restricted cell information of the first network slice, that the cell in which the terminal device is located is within a restricted cell range of the first network slice; and
sending, by the mobility management network element, a reject message in response to the request message.
